# EUROPÄISCHE PATENTSCHRIFT

(11) **EP 1 955 567 B1**
(45) Veröffentlichungstag und Bekanntmachung des Hinweises auf die Patenterteilung: **06.06.2012**
(21) Anmeldenummer: 06819541.1
(22) Anmeldetag: 16.11.2006
(51) Int. Cl.: H04W 76/04, H04W 36/14

(54) **VERFAHREN ZUM WECHSEL VON ZUMINDEST EINEM ERSTEN KOMMUNIKATIONSDIENST AUF ZUMINDEST EINEN ZWEITEN KOMMUNIKATIONSDIENST ZUR ÜBERTRAGUNG VON UNTERSCHIEDLICHEN DATENINHALTEN**
METHOD FOR SWITCHING FROM AT LEAST ONE FIRST COMMUNICATION SERVICE TO AT LEAST ONE SECOND COMMUNICATION SERVICE IN ORDER TO TRANSMIT DIFFERENT DATA CONTENTS
PROCEDE DE COMMUTATION D'AU MOINS UN PREMIER SERVICE DE COMMUNICATION VERS AU MOINS UN DEUXIEME SERVICE DE COMMUNICATION POUR LA TRANSMISSION DE DIVERS CONTENUS DE DONNEES

(30) Priorität: 02.12.2005 DE 102005057759
(43) Veröffentlichungstag der Anmeldung: 13.08.2008
(73) Patentinhaber: SIEMENS AKTIENGESELLSCHAFT, 80333 München (DE)
(72) Erfinder: BELLING, Thomas, 85435 Erding (DE); ZAUS, Robert, 80686 München (DE)
(86) Internationale Anmeldenummer: PCT/EP2006/068563
(87) Internationale Veröffentlichungsnummer: WO 2007/062988

(56) Entgegenhaltungen:
- EP-A- 1 594 326
- WO-A-01/76288
- WO-A-2005/015938
- "Universal Mobile Telecommunications System (UMTS)" ETSI STANDARDS, EUROPEAN TELECOMMUNICATIONS STANDARDS INSTITUTE, SOPHIA-ANTIPO, FR, Bd. 3-CN3, Nr. V630, Juni 2005 (2005-06), XP014030501 ISSN: 0000-0001 in der Anmeldung erwähnt

## Beschreibung

Die Erfindung betrifft ein Verfahren zum Wechsel von zumindest einem ersten Kommunikationsdienst auf einen zweiten Kommunikationsdienst zur Übertragung von unterschiedlichen Dateninhalten, vorzugsweise Sprachdaten oder Multimediadaten in einem mobilen Kommunikationssystem, bei dem der erste eine Nutzverbindung aufweisende Kommunikationsdienst zwischen einem ersten mobilen Kommunikationsendgerät und einem zweiten mobilen Kommunikationsendgerät aufgebaut wird, wobei das erste mobile Kommunikationsendgerät zumindest einer ersten Mobilvermittlungseinheit und das zweite mobile Kommunikationsendgerät zumindest einer zweiten Mobilvermittlungseinheit des mobilen Kommunikationssystems (KS) zugeordnet sind.

In bestehenden Mobilfunksystemen der zweiten Generation, so genannten "Global System for Mobile Communications" (GSM) Mobilfunksystemen, insbesondere aber bei Mobilfunksystemen der dritten Generation, d.h. auf der "Universal Mobile Telecommunication System" (UMTS) Übertragungstechnologie basierenden Mobilfunksystemen, sind Kommunikationsdienste zur Übertragung von Sprachdaten und von Multimediadaten verfügbar, die auf einer leitungsvermittelten Datenübertragung basieren. Die Übertragung von Multimediadaten erfolgt dabei nach dem Standard 3GPP TS 26.110 und ITU-T H.324.

Im 3GPP Mobilfunkstandard ist seit Release 5.0 der Spezifikation TS 23.172 ein spezieller Kommunikationsdienst, und zwar der "Multimedia Service (UDI/RDI) with Fallback to Speech and Service Modification"-Kommunikationsdienst vorgesehen, welcher einem Mobilfunkteilnehmer die Möglichkeit bietet, über das mobile Kommunikationsendgerät gegenüber dem mobilen Kommunikationssystem bereits beim Aufbau eines Kommunikationsdienstes mittels einer geeigneten Signalisierung anzuzeigen, dass beispielsweise bei einem bestehenden Sprachdienst ein Wechsel auf einen weiteren Kommunikationsdienst, insbesondere einen Multimedia-Kommunikationsdienst wie beispielsweise einem Videotelefonie-Kommunikationsdienst möglich sein soll.

Beispielsweise wird in einem ersten Anwendungsbeispiel zwischen zumindest zwei Kommunikationsteilnehmern ein sprachdatenbasierter Kommunikationsdienst aufgebaut, bei dem während der Inanspruchnahme des sprachdatenbasierten Kommunikationsdienstes durch einen Teilnehmer ein Wechsel auf einen multimediadatenbasierten Kommunikationsdienst initiiert wird, beispielsweise um mit dem Kommunikationsteilnehmer Multimediadaten austauschen zu können. Hierbei kann die Übertragung der Multimediadaten sowohl von dem anrufenden als auch von dem angerufenen Kommunikationsteilnehmer initiiert werden. Nach erfolgter Übertragung der Multimediadaten kann - falls von einem der Teilnehmer gewünscht - von dem multimediadatenbasierten Kommunikationsdienst zum sprachdatenbasierten Kommunikationsdienst zurückgewechselt werden.

In einem zweiten Anwendungsbeispiel wird zunächst ein multimediadatenbasierter Kommunikationsdienst, welcher die Bereitstellung von ausreichenden Übertragungsressourcen innerhalb des mobilen Kommunikationssystems erfordert, durch zumindest einen der Kommunikationsteilnehmer aufgebaut. Bei einer Reduzierung der Übertragungskapazität der verfügbaren Übertragungsressourcen ist es wünschenswert, dass obwohl die verfügbaren Übertragungsressourcen für die Aufrechterhaltung des multimediadatenbasierten Kommunikationsdienstes nicht mehr ausreichen zumindest ein sprachdatenbasierten Kommunikationsdienst zwischen den betroffenen Kommunikationsteilnehmern weiterhin aufrechterhalten bleibt.

So ist beispielsweise im Standard 3GPP TS 23.172, v 6.3.0, Kapitel 4.2.5 festgelegt, dass initiiert durch das mobile Kommunikationssystem nach Verknappung der verfügbaren Übertragungsressourcen auf einen sprachdatenbasierten Kommunikationsdienst gewechselt wird. Insbesondere bei einer Verschlechterung der Funkverbindung zwischen dem mobilen Kommunikationsendgerät und dem vorgesehenen Zugangsnetz ist die für die Bereitstellung eines multimediadatenbasierten Kommunikationsdienstes geforderte Übertragungskapazität von beispielsweise 64 kbit/s nicht mehr gegeben, wohingegen eine reduzierte Übertragungskapazität von ca. 12,2 kbit/s für die Bereitstellung eines sprachdatenbasierten Kommunikationsdienst ausreicht.

Auch treten beim Wechsel des mobilen Kommunikationsendgerätes von einer ersten in eine zweite Funkzelle häufig derartige Szenarien auf, insbesondere dann, wenn in der zweiten Funkzelle die zur Aufrechterhaltung des multimediadatenbasierten Kommunikationsdienstes erforderliche Übertragungskapazität von 64 kbit/s nicht zur Verfügung steht. Darüber hinaus ist es möglich, dass bei einem Wechsel des mobilen Zugangsnetzes das neue mobile Zugangsnetz die Bereitstellung vom multimediadatenbasierten Kommunikationsdiensten allgemein nicht unterstützt und somit ein Wechsel auf einen sprachdatenbasierten Kommunikationsdienst erforderlich wird.

Über die innerhalb des mobilen Kommunikationssystems für die Steuerung und Vermittlung der Kommunikationsdienste zuständigen Mobilfunkvermittlungseinheiten ("Mobile Services Switching Centre, MSC) wird der Wechsel von einem multimediadatenbasierten zu einem sprachdatenbasierten Kommunikationsdienst durchgeführt. Diese können auch selbst einen Wechsel initiieren. Nach dem beschriebenen aufgrund Ressourcenknappheit initiierten Wechsel von dem multimediadatenbasierten Kommunikationsdienst auf einen sprachdatenbasierten Kommunikationsdienst kann - gesteuert durch die Mobilfunkvermittlungsstelle - bei sich entspannender Ressourcensituation ein erneuter Wechsel auf den multimediadatenbasierten Kommunikationsdienst durchgeführt werden. Die hierzu erforderlichen Signalisierungsschritte innerhalb des mobilen Kommunikationssystems sind im Standard 3GPP TS 23.172, v 6.3.0, Kapitel 4.2.5.2 beschrieben.

Bei beiden beschriebenen Anwendungsbeispielen ist jeweils ein Wechsel von einem bestehenden ersten Kommunikationsdienst auf einen unterschiedliche Dateninhalte unterstützenden zweiten Kommunikationsdienst erforderlich.. Das Initiierung des Wechselanfrage innerhalb des Kommunikationsnetzwerk erfolgt hierbei unabhängig davon, ob der weitere zweite Kommunikationsteilnehmer dem Wechsel des bestehenden Kommunikationsdienstes zustimmt.

Beispielsweise wird gemäß dem derzeit gültigen Standard dem zweiten Kommunikationsteilnehmer die Möglichkeit zur Verfügung gestellt, einen derartigen Wechsel abzulehnen, um beispielsweise seine Privatsphäre zu schützen. Ebenso wird bei der Initiierung des Wechsels durch den ersten Kommunikationsteilnehmer derzeit nicht überprüft, ob die auf Seiten des zweiten Kommunikationseilnehmers verfügbaren Übertragungsressourcen, beispielsweise die Übertragungsbandbreite der Funkschnittstelle für den "neuen" Kommunikationsdienst ausreichend sind.

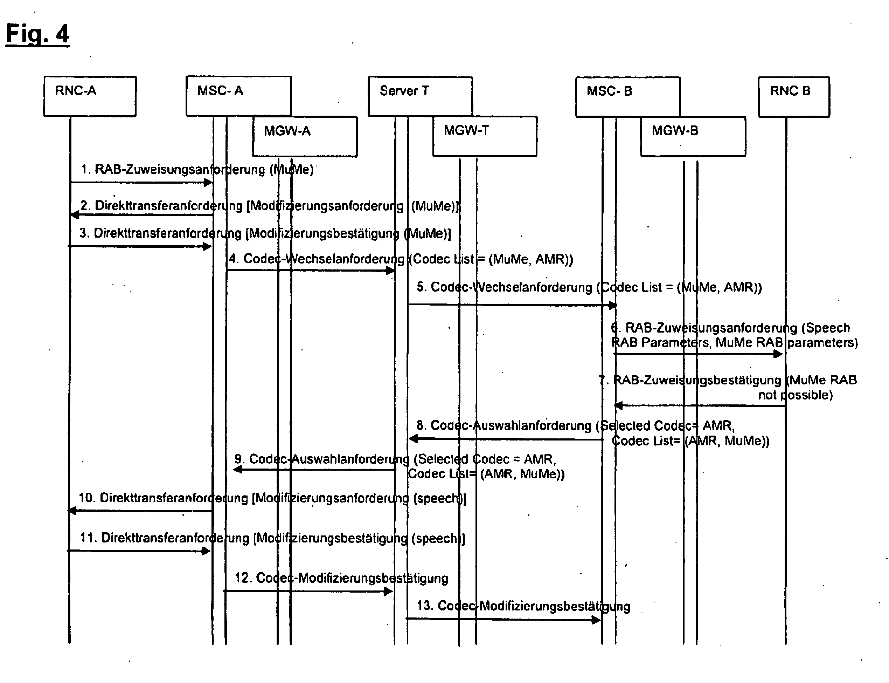

Hierdurch kommt es in den beschriebenen Anwendungsfällen zu einer Unterbrechung des Kommunikationsdienstes, selbst wenn einer der Kommunikationsteilnehmer den Wechsel ablehnt oder auf Seiten des zweiten Kommunikationsteilnehmers keine ausreichenden Übertragungsressourcen verfügbar sind. Gemäß der derzeit standardisierten Signalisierungsverfahren wird die derzeit gültige Konfiguration für den bestehenden Kommunikationsdienst bereits zu einem Zeitpunkt im Signalisierungsverfahren unterbrochen, zu dem noch nicht feststeht, ob ausreichende Übertragungsressourcen verfügbar sind oder einer der Kommunikationsteilnehmer den Wechsel ablehnt (siehe hierzu TS 23.172, v 6.3.0, Kapitel 4.3.5.1). Bei einem Scheitern des geplanten Wechsels muss die ursprünglich gültige Konfiguration somit mittels einer aufwendigen erneuten Signalisierung wiederhergestellt werden, bevor der sprachdatenbasierte Kommunikationsdienst fortgesetzt werden kann (siehe hierzu TS 23.172, v 6.3.0, Kapitel 4.3.5.2, Figuren 4.3.5.2/1 und 2 sowie 4 und 5).

Derzeit wird im mobilen Kommunikationsnetzwerk, dem so genannten "Core Network", zur Signalisierung des Wechsels des Kommunikationsdienstes das so genannte "Codec Modification"-Verfahren des so genannten "Bearer Independent Call Control" (BICC)-Signalisierungsprotokolls der ITU-T eingesetzt (siehe hierzu ITU-T Q.1902.4, Kapitel 10.4). Gemäß dem Standard 3GPP TS 23.172 wird während des Wechsels von einem sprachdatenbasierten auf einen multimediadatenbasierten Kommunikationsdienst die Nutzverbindung unterbrochen, um aufgrund des Wechsels hervorgerufene Fehlfunktionen in so genannten "Media-Gateway"-Einheiten zu vermeiden. Hierbei können Fehlfunktionen aufgrund der technischen Ausbildung der Media-Gateway-Einheiten entstehen, welche beispielsweise nicht in der Lage sind, Multimediadaten in Sprachdaten und vice versa umzuwandeln. Die Multimedia-Gateway-Einheit wird hierzu durch die zugeordnete Mobilvermittlungseinheit dadurch gesteuert, dass dem Signalisierungsparameter "stream mode" der Wert "INACTIVE" zugeordnet wird (siehe hierzu 3GPP TS 23.712, v 6.3.0, Kapitel 4.3.5.1). Nachteilig wird somit bereits vor der Überprüfung der Durchführbarkeit eines Wechsels des Kommunikätionsdienstes die Nutzdatenverbindung des bestehenden Kommunikationsdienstes unterbrochen.

Die Aufgabe der Erfindung liegt darin, ein verbessertes Verfahren zum Wechsel von beispielsweise einem sprachdatenbasierten Kommunikationsdienst auf beispielsweise einen multimediadatenbasierten Kommunikationsdienst oder zum Wechsel von beispielsweise einem multimediadatenbasierten Kommunikationsdienst auf beispielsweise einen sprachdatenbasierten Kommunikationsdienst anzugeben, bei dem eine Unterbrechung der Nutzverbindung sowie eine aufwendige Wiederherstellung der bestehenden Konfiguration für den sprachdatenbasierten Kommunikationsdienst vermieden werden kann, falls der Wechsel nicht zur Stande kommt. Die Aufgabe wird ausgehend von dem Oberbegriff des Patentanspruches 1 durch dessen kennzeichnende Merkmale gelöst.

Der wesentliche Aspekt des erfindungsgemäßen Verfahrens ist darin zu sehen, dass zumindest in der ersten Mobilvermittlungseinheit die Umsetzbarkeit des Wechsels ermittelt wird und bei einem positiven Ermittlungsergebnis in der ersten Mobilvermittlungseinheit eine eine Aufforderung zur Überprüfung der Umsetzbarkeit des Wechsels auf den zweiten Kommunikationsdienst anzeigende Dienstsignalisierungsnachricht gebildet und zumindest an die zweite Mobilvermittlungseinheit übertragen wird. Ferner wird initiiert durch die in der zweiten Mobilvermittlungseinheit empfangene Dienstsignalisierungsnachricht die Umsetzbarkeit des Wechsels auf den zweiten Kommunikationsdienst ermittelt und abhängig vom Ermittlungsergebnis die Nutzverbindung zwischen dem ersten mobilen Kommunikationsendgerät (KA) und dem zweiten mobilen Kommunikationsendgerät (KB) unterbrochen und der Wechsel vom ersten Kommunikationsdienst auf den zweiten Kommunikationsdienst eingeleitet. Vorteilhaft ist es durch den zusätzlichen Signalisierungsschritt gemäß dem BICC-Signalisierungsprotokoll möglich, auch auf der Seite des zweiten Kommunikationsteilnehmers zu überprüfen, ob der Wechsel des Kommunikationsdienstes von dem Zugangsnetz unterstützt sowie von dem zweiten Kommunikationsteilnehmer gewünscht wird, bevor die Nutzverbindung des bestehende Kommunikationsdienstes im Kernnetz unterbrochen wird. Durch die erfindungsgemäße Signalisierung zwischen der ersten und zweiten Mobilvermittlungsstelle sowie den jeweils zugeordneten Zugangskontrollereinheiten kann bereits vor dem Wechsel des Kommunikationsdienstes überprüft werden, ob der Wechsel an der entsprechenden Funkschnittstelle im zweiten Zugangsnetz unterstützt wird. Hierdurch können unnötige Unterbrechungen der Nutzverbindung effektiv vermieden werden. Auch kann die Dauer der Unterbrechung der Nutzverbindung im Rahmen eines Wechsels des Kommunikationsdienstes deutlich reduziert werden.

Weitere vorteilhafte Ausbildungen des erfindungsgemäßen Verfahrens sind den weiteren Patentansprüchen zu entnehmen.

Im Folgenden wird das erfindungsgemäße Verfahren an einem Ausführungsbeispiel sowie mehreren Figuren näher erläutert. Es zeigen:
- Fig. 1: beispielhaft in einem schematischen Blockschaltbild die zur Ausführung des erfindungsgemäßen Verfahrens zusammenwirkenden Netzkomponenten eines mobilen Kommunikationssystems,
- Fig. 1a, b: beispielhaft in schematischer Darstellung die gemäß dem Stand der Technik zum Wechsel eines Kommunikationsdienstes vorgesehenen Signalisierungsschritte,
- Fig. 2a,b: beispielhaft in schematischer Darstellung die erfindungsgemäß verbesserten Signalisierungsschritte bei einem netzwerkinitiierten Wechsel,
- Fig. 3a,b: beispielhaft in schematischer Darstellung die erfindungsgemäß verbesserten Signalisierungsschritte bei einem benutzerinitiierten Wechsel,
- Fig. 4: beispielhaft die bei einer Ablehnung des Wechsels aufgrund mangelnder Übertragungsressourcen vorgesehene Signalisierungsvariante im Rahmen eines netzwerkinitiierten Wechsels und
- Fig. 5: beispielhaft eine alternative Signalisierungsvariante bei einer Ablehnung des Wechsels aufgrund mangelnder Übertragungsressourcen.

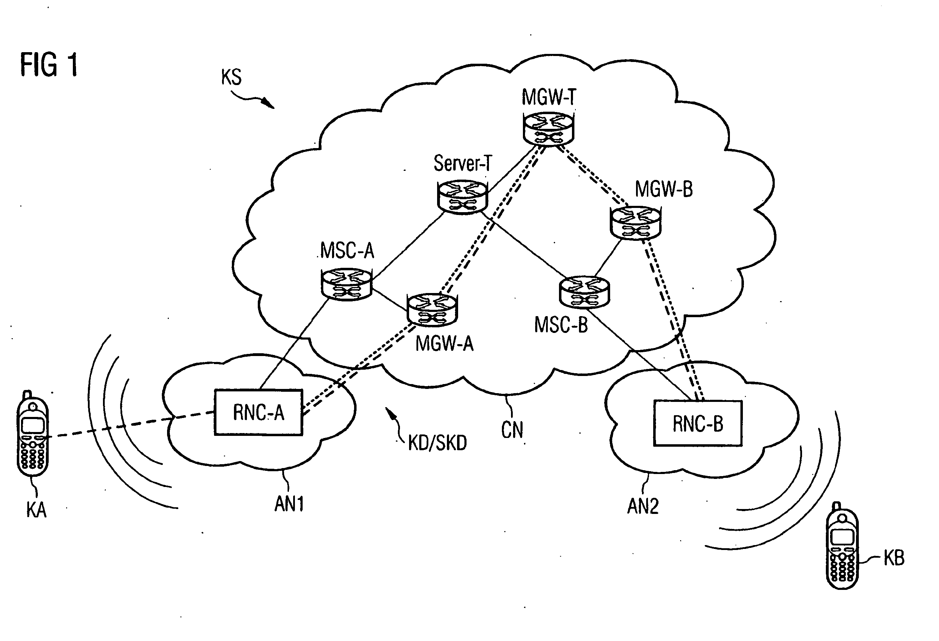

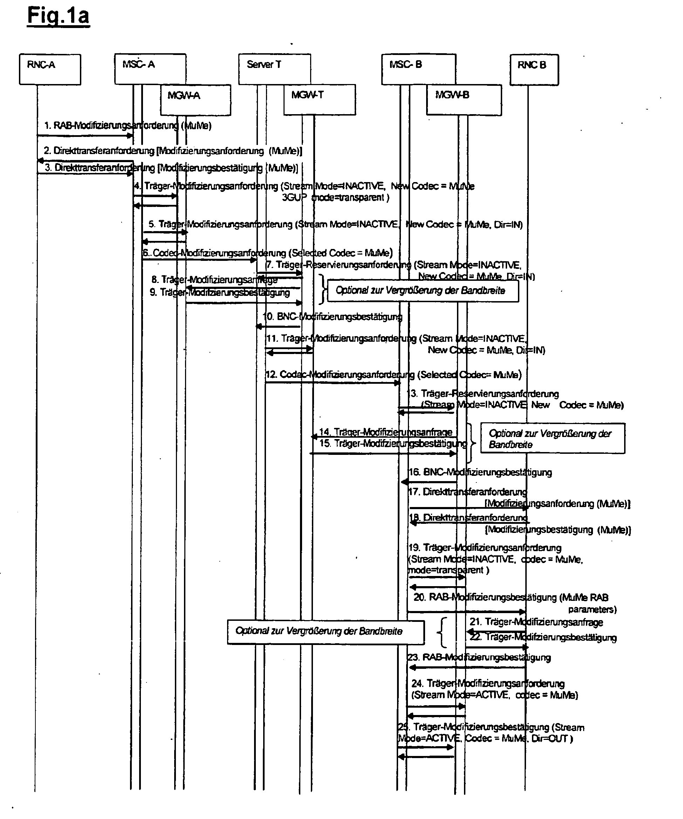

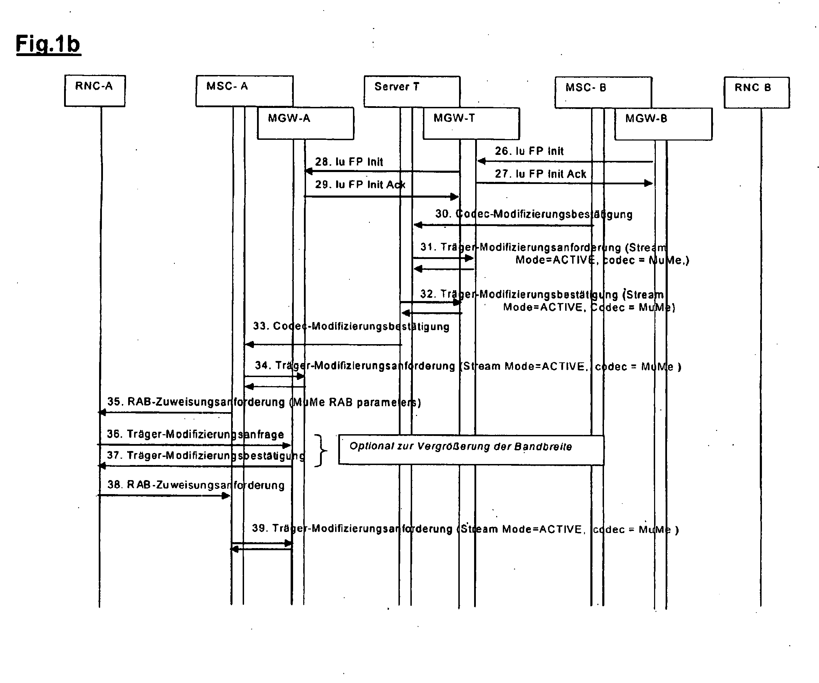

In Figur 1 ist beispielhaft in einem schematischen Blockschaltbild der Aufbau eines mobilen Kommunikationssystems KS dargestellt, bei dem an ein Kommunikationsnetzwerk CN über zumindest ein erstes Zugangsnetz AN1 ein erstes mobiles Kommunikationsendgerät KA und über zumindest ein zweites Zugangsnetz AN2 ein zweites mobiles Kommunikationsendgerät KB angeschlossen sind. Das erste mobile Kommunikationsendgerät KA ist hierbei einem ersten Kommunikationsteilnehmer A und das zweite mobile Kommunikationsendgerät KB einem zweiten Kommunikationsteilnehmer B zugeordnet. Hierbei ist die dargestellte Anordnung der unterschiedlichen Netzkomponenten lediglich beispielhaft gewählt und keinesfalls das erfindungsgemäße Verfahren darauf beschränkt.

Zum Aufbau von unterschiedlichen Kommunikationsdiensten KD innerhalb des mobilen Kommunikationssystems KS sind im ersten Zugangsnetz AN1 zumindest ein erster "Radio Network Controller" bzw. erste Zugangskontrollereinheit RNC-A und im zweiten Zugangsnetz AN2 ein zweiter "Radio Network Controller" bzw. zweite Zugangskontrollereinheit RNC-B vorgesehen, welche jeweils mit einem ersten bzw. zweiten "Mobile-Services Switching Centre" (MSC)" bzw. Mobilvermittlungseinheit MSC-A, MSC-B und einer von der jeweiligen Mobilvermittlungseinheit MSC-A gesteuerten Media-Gateway-Einheit MGW-A, MGW-B verbunden sind.

Die erste und zweite Mobilvermittlungseinheit MSC-A, MSC-B sind mit zumindest einer weiteren Transitvermittlungseinheit Server-T verbunden, an die eine dritte Media-Gateway-Einheit MGW-T angeschlossen ist. Die erste bis dritte Media-Gateway-Einheit MGW-A, MGW-B, MGW-T stehen jeweils über Signalisierungsverbindungen miteinander in Verbindung, wobei die erste bzw. zweite Media-Gateway-Einheit MGW-A, MGW-B zusätzlich mit der ersten bzw. zweiten Zugangskontrollereinheit RNC-A, RNC-B verbunden sind. Die erste bis dritte Media-Gateway-Einheit MGW-A, MGW-B, MGW-T sind insbesondere zur Anpassung unterschiedlicher Datenformate sowie Übertragungsraten innerhalb des mobilen Kommunikationssystems KS vorgesehen.

Bei dem in Figur 1 dargestellten Ausführungsbeispiel ist vom ersten mobilen Kommunikationsendgerät KA über die erste Zugangskontrollereinheit RNC-A, die erste Media-Gateway-Einheit MGW-A zur dritten Media-Gateway-Einheit MGW-T ein Kommunikationsdienst KD, vorzugsweise sprachdatenbasierter Kommunikationsdienst SKD aufgebaut, der von der dritten Media-Gateway-Einheit MGW-T über die zweite Media-Gateway-Einheit MGW-B zur zweiten Zugangskontrollereinheit RNC-A und schließlich zum zweiten mobilen Kommunikationsendgerät KB geführt ist.

In den Figuren 1a,b sind beispielhaft die im Standard 3GPP TS 23.172 definierten Signalisierungsschritte bei einem durch das Kommunikationsnetzwerk CN initiierten Wechsel von einem sprachdatenbasierten Kommunikationsdienst SKD auf einen multimediadatenbasierten Kommunikationsdienst MKD dargestellt, wobei der sprachdatenbasierten Kommunikationsdienst SKD zur Übertragung von Sprachdaten SD und der multimediadatenbasierten Kommunikationsdienst MKD zur Übertragung von Multimediadaten MD vorgesehen sind.

Die Figuren 1a,b zeigen hierbei die Signalisierungsschritte zwischen der ersten Zugangskontrollereinheit RNC-A, der ersten Mobilvermittlungseinheit MSC-A, der von der ersten Mobilvermittlungseinheit MSC-A kontrollierten ersten Media-Gateway-Einheit MGW-A, der Transitvermittlungseinheit Server-T, einer von der Transitvermittlungseinheit Server-T kontrollierten dritten Media-Gateway-Einheit MGW-T, einer zweiten Mobilvermittlungseinheit MSC-B, einer von der zweiten Mobilvermittlungseinheit MSC-B kontrollierten zweiten Media-Gateway-Einheit MGW-B und einer zweiten RNC-Einheit RNC-B dargestellt.

Der netzwerkinitiierte Wechsel des Kommunikationsdienstes KD wird hierbei durch den dem ersten mobilen Kommunikationsendgerät KA zugeordneten Abschnitt des Kommunikationsnetzwerks CN, und zwar durch die erste Mobilvermittlungseinheit MSC-A angestoßen. Alternativ kann dieser jedoch auch durch den dem zweiten mobilen Kommunikationsendgerät KB zugeordneten Abschnitt des Kommunikationsnetzwerks CN erfolgen oder durch einen der Kommunikationsteilnehmer A, B selbst initiiert werden, wobei dann analoge Signalisierungsschritte wie in Figuren 1a,b verwendet werden.

Die einzelnen in den Figuren 1a,b dargestellten Signalisierungsschritte basieren auf dem so genannten "Codec Modification"-Verfahren des "Bearer Independent Call Control" (BICC)-Signalisierungsprotokolls gemäß dem ITU-T-Standard Q.1902.4, Kapitel 10.4 und werden im Folgenden kurz an einem Ausführungsbeispiel erläutert.

In einem ersten Schritt wird durch die erste Zugangskontrollereinheit RNC-A mittels einer "RAB Modify Request"-Nachricht der ersten Mobilvermittlungseinheit MSC-A mitgeteilt, dass beispielsweise aufgrund einer Änderung der verfügbaren Übertragungsressourcen ein Wechsel des Kommunikationsdienstes KD möglich ist, und zwar von dem aktuell bestehenden sprachdatenbasierten Kommunikationsdienst SKD auf einen multimediadatenbasierten Kommunikationsdienst MKD. Hierzu wird in der "RAB Modify Request"-Nachricht ein den multimediadatenbasierten Kommunikationsdienst MKD kennzeichnender so genannter "Radio Access Bearer" Parameter übermittelt.

Daraufhin sendet in einem zweiten Schritt die erste Mobilvermittlungseinheit MSC-A mittels einer so genannten "Direct Transfer"-Nachricht der ersten Zugangskontrollereinheit RNC-A eine so genannte "Modify"-Nachricht, welche von der ersten Zugangskontrollereinheit RNC-A an das erste mobile Kommunikationsendgerät KA des ersten Teilnehmers A weitergeleitet wird. Darin wird durch die erste Mobilvermittlungseinheit MSC-A der Wechsel auf einen multimediadatenbasierten Kommunikationsdienst MKD mittels eines den multimediadatenbasierten Kommunikationsdienst MKD kennzeichnenden so genannten "Bearer Capability" Parameter angezeigt.

In einem dritten Schritt wird durch den ersten Teilnehmer A, der den Wechsel des Kommunikationsdienstes KD akzeptiert, über das erste mobile Kommunikationsendgerät KA eine so genannte "Modify Complete"- Nachricht erzeugt und an die erste Zugangskontrollereinheit RNC-A übertragen. Durch die erste Zugangskontrollereinheit RNC-A wird die empfangene "Modify Complete"- Nachricht mittels einer so genannten "Direct Transfer"-Nachricht an die erste Mobilvermittlungseinheit MSC A weitergeleitet.

In dem nachfolgenden vierten und fünften Schritt wird durch die erste Mobilvermittlungseinheit MSC-A die erste Media-Gateway-Einheit MGW-A auf den Wechsel des Kommunikationsdienstes KD vorbereitet und die Nutzerverbindung des bestehenden sprachdatenbasierten Kommunikationsdienstes SKD durch Übersendung des Parameters "stream mode" mit dem Wert "INACTIVE" in einer "Modify Bearer Characteristics"-Nachricht unterbrochen, um während des Wechsels des Kommunikationsdienstes KD die Gefahr von Übertragungsfehlern in der ersten Media-Gateway-Einheit MGW-A zu reduzieren. Gleichzeitig wird in der "Modify Bearer Characteristics"-Nachricht dem Parameter "New Codec" der Multimediadatencodec MuMe zugeordnet und mitübertragen.

Die Nutzverbindung des bestehenden sprachdatenbasierten Kommunikationsdienstes SKD ist somit bereits unterbrochen, bevor der zweite Kommunikationsteilnehmer. B seine Zustimmung zum Wechsel des Kommunikationsdienstes KD gegeben hat und ohne dass überprüft wurde, ob die auf Seiten des zweiten Kommunikationsteilnehmer B verfügbaren Übertragungsressourcen für den Aufbau eines multimediadatenbasierten Kommunikationsdienstes MKD ausreichend sind..

Durch die erste Mobilvermittlungseinheit MSC-A wird in einem sechsten Schritt an die Transfervermittlungseinheit Server-T eine so genannte "Modify Codec"-Nachricht gesendet, über welche dieser der geplante Wechsel des Kommunikationsdienstes KD angezeigt wird. Insbesondere wird hierzu dem Parameter "Selected Codec" der Multimediadatencodec MuMe zugeordnet.

Mittels des in Figur 1a dargestellten siebten, zehnten und elften Signalisierungsschrittes wird durch die Transfervermittlungseinheit Server-T die dritte Media-Gateway-Einheit MGW-T darauf vorbereitet, dass in Kürze ein Kommunikationsdienstewechsel durchgeführt wird. Gleichzeitig wird die Nutzverbindung des bestehenden sprachdatenbasierten Kommunikationsdienstes SKD durch Übersendung des Parameters "stream mode" mit dem Wert "INACTIVE" in einer "Reserve Modify Bearer Characteristics"-Nachricht bzw. "Modify Bearer Characteristics"-Nachricht unterbrochen.

Optional können mittels eines achten und neunten Signalisierungsschrittes zwischen der ersten und dritten Media-Gateway-Einheit MGW-A, MGW-T Signalisierungsparameter ausgetauscht werden, über welche die Bandbreite der Nutzverbindung angepasst werden kann.

In einem zwölften Schritt wird durch die Transfervermittlungseinheit Server-T an die zweite Mobilvermittlungseinheit MSC-B eine "Modify Codec"-Nachricht gesendet und durch die Zuweisung des Multimediadatencodec MuMe an den Parameter "Selected Codec" die zweite Mobilvermittlungseinheit MSC-B zum Wechsel des Kommunikationsdienstes KD aufgefordert.

In seinem dreizehnten, sechzehnten und neunzehnten Signalisierungsschritt wird durch die zweite Mobilvermittlungseinheit MSC-B die zweite Media-Gateway-Einheit MGW-B auf einen Wechsel des Kommunikationsdienstes KD vorbereitet und die Nutzverbindung des bestehenden sprachdatenbasierten Kommunikationsdienstes SKD durch Übersendung des Parameters "stream mode" mit dem Wert "INACTIVE" in einer "Reserve Modify Bearer Characteristics"-Nachricht und "Modify Bearer Characteristics"-Nachricht unterbrochen.

Optional können zwischen der zweiten Media-Gateway-Einheit MGW-B und der dritten Media-Gateway-Einheit MGW-T in einem vierzehnten und fünfzehnten Signalisierungsschritt einzelne Parameter ausgetauscht werden, über welche die Bandbreite der Nutzverbindung angepasst wird.

In einem siebzehnten Signalisierungsschritt wird durch die zweite Mobilvermittlungseinheit MSC-B mittels einer "Direct Transfer" Nachricht eine "Modify"-Nachricht an die zweite Zugangskontrollereinheit RNC-B gesendet, welche durch die zweite Zugangskontrollereinheit RNC-B an das zweite mobile Kommunikationsendgerät KB des zweiten Kommunikationsteilnehmers B weitergeleitet wird. Mittels des in der "Modify"-Nachricht übertragenen den multimediadatenbasierten Kommunikationsdienst MKD kennzeichnenden "Bearer Capability" Parameters wird durch die zweite Mobilvermittlungsstelle MSC-B der Wechsel des Kommunikationsdienstes KD dem zweiten mobilen Kommunikationsendgerät KB bzw. dem zweiten Kommunikationsteilnehmer B vorgeschlagen, wobei zu diesem Zeitpunkt der zweiten Mobilvermittlungseinheit MSC-B noch keine Informationen über die Verfügbarkeit der zum Aufbau des multimediadatenbasierten Kommunikationsdienstes MKD erforderlichen Übertragungsressourcen im zweiten Zugangsnetz AN2 vorliegen.

Somit wird ohne Kenntnis der Verfügbarkeit einer eine ausreichende Übertragungskapazität aufweisenden Funkschnittstelle zwischen dem zweiten mobilen Kommunikationsendgerät KB und der zweiten Mobilvermittlungseinheit MSC-B der Wechsel des Kommunikationsdienstes KD angestoßen.

Im Anschluss an die Zustimmung des zweiten Kommunikationsteilnehmers B zum vorgeschlagenen Wechsel wird in einem achtzehnten Signalisierungsschritt durch das zweite mobile Kommunikationsendgerät KB des zweiten Kommunikationsteilnehmers B eine "Modify Complete"-Nachricht erzeugt und diese eingebettet in eine "Direct Transfer"-Nachricht von der zweiten Zugangskontrollereinheit RNC-B an die zweite Mobilvermittlungsstelle MSC-B übertragen.

Die zweite Mobilvermittlungseinheit MSC B sendet daraufhin in einem zwanzigsten Signalisierungsschritt eine "RAB Assignment Modify Request"-Nachricht an die zweite Zugangskontrollereinheit RNC-B, um eine zwischen dem zweiten mobilen Kommunikationsendgerät KB und der zweiten Zugangskontrollereinheit RNC-B bestehende Funk-Zugangsverbindung für die Übertragung von Multimediadaten MD zu konfigurieren. Hierzu werden durch die zweite Zugangskontrollereinheit RNC-B mittels in den Figuren 1a,b nicht dargestellter Signalisierungsschritte einzelne Signalisierungsparameter mit dem zweiten mobilen Kommunikationsendgerät KB des Teilnehmers B ausgetauscht, um die Umkonfiguration der Funk-Zugangsverbindung umzusetzen.

Optional können zwischen der zweiten Media-Gateway-Einheit MGW-B und der zweiten Zugangskontrollereinheit RNC-B in einem einundzwanzigsten und zweiundzwanzigsten Signalisierungsschritt weitere Signalisierungsarameter ausgetauscht werden, über welche die Bandbreite der Nutzverbindung angepasst werden kann.

Der dreiundzwanzigste Signalisierungsschritt betrifft die Umkonfiguration der Funk-Zugangsverbindung, welche der zweiten Mobilvermittlungseinheit MSC-B von der zweiten Zugangskontrollereinheit RNC-B mittels einer "RAB Assignment Modify Response"-Nachricht mitgeteilt wird. Sollte eine Umkonfiguration mangels verfügbarer Übertragungsressourcen.nicht durchführbar sein, so wird dies der zweiten Mobilvermittlungseinheit MSC-B von der zweiten Zugangskontrollereinheit RNC-B ebenfalls mitgeteilt.

Mittels einer "Modify Bearer Characteristics"-Nachricht und einer "Confirm Bearer Characteristics"-Nachricht wird in einem vierundzwanzigsten und fünfundzwanzigsten Signalisierungsschritt der Wechsel des Kommunikationsdienstes KD in der zweiten Mobilvermittlungseinheit MSC-B und der zweiten Media-Gateway-Einheit MGW-B umgesetzt und anschließend eine Nutzverbindung aufgebaut, d.h. dem Parameter "stream mode" der Wert "ACTIVE" und dem Parameter "Codec" der Multimediadaten codec MuMe zugeordnet.

In einem sechsundzwanzigsten und siebenundzwanzigstens Signalisierungsschritt werden Signalisierungsparameter zwischen der zweiten Media-Gateway-Einheit MGW-B und der dritten.Media-Gateway-Einheit MGW-T ausgetauscht, um das zur Realisierung der Nutzverbindung vorgesehene "Nb Framing Protokoll"-Signalisierungsprotokoll für den Transport von Multimediadaten MD zu konfigurieren. Analog hierzu findet ebenfalls ein Austausch von Signalisierungsparametern zwischen der dritten und ersten Media-Gateway-Einheit MGW-T, MGW-A in einem achtundzwanzigsten und neunundzwanzigstens Signalisierungsschritt statt.

Die zweite Mobilvermittlungseinheit MSC-B sendet in einem dreißigsten Signalisierungsschritt eine "Successful Codec Modification"-Nachricht an die Transitvermittlungseinheit Server-T, um die Umsetzung des Wechsels auf den multimediadatenbasierten Kommunikationsdienst MKD zu bestätigen.

Mittels eines einunddreißigsten und zweiunddreißigsten Signalisierungsschritts wird durch die Transitvermittlungseinheit Server-T die dritte Media-Gateway-Einheit MGW-T angewiesen, den Wechsel auf den multimediadatenbasierten Kommunikationsdienst MKD vorzunehmen und die Nutzverbindung durchzuschalten. Hierzu werden über eine "Modify Bearer Characteristics"-Nachricht und eine "Confirm Bearer Characteristics"-Nachricht der Parameter "stream mode" auf den Wert "ACTIVE" gesetzt und dem Parameter "codec" der Multimediadatencodec MuMe zugeordnet.

Von der Transitvermittlungseinheit Server-T wird die Umsetzung des Kommunikationsdienstewechsels in einem dreiunddreißigsten Schritt durch Übertragung einer "Successful Codec Modification"-Nachricht der ersten Mobilvermittlungseinheit MSC-A angezeigt.

Die erste Mobilvermittlungseinheit MSC-A weist im Anschluss daran in einem vierunddreißigsten und neununddreißigsten Signalisierungsschritt die erste Media-Gateway-Einheit MGW-A über eine "Modify Bearer Characteristics"-Nachricht an, den Wechsel des Kommunikationsdienstes KD vorzunehmen und die Nutzverbindung durchzuschalten. Somit besteht eine Unterbrechung der Nutzverbindung im Zeitraum zwischen dem vierten und den neununddreißigsten Signalisierungsschritt.

Durch die erste Mobilvermittlungseinheit MSC-A wird mittels Übersendung einer "RAB Assignment Modify Request"-Nachricht an die erste Zugangskontrollereinheit RNC-A die Neukonfiguration der Funk-Zugangsverbindung für Multimediadaten MD initiiert (fünfunddreißigster Signalisierungsschritt). Daraufhin werden zwischen der ersten Zugangskontrollereinheit RNC-A und dem ersten mobilen Kommunikationsendgerät KA des ersten Kommunikationsteilnehmers A Signalisierungsparameter ausgetauscht, um die Umkonfiguration der Funk-Zugangsverbindung umzusetzen.

Optional können mittels eines sechsunddreißigsten und siebenunddreißigsten Signalisierungsschritts zwischen der ersten Zugangskontrollereinheit RNC-A und der ersten Media-Gateway-Einheit MGW-A weitere Signalisierungsparameter ausgetauscht werden, über welche die Bandbreite der Nutzverbindung angepasst werden kann.

In einem achtunddreißigsten Schritt teilt die erste Zugangskontrollereinheit RNC-A durch Übersendung einer "RAB Assignment Modify Response"-Nachricht der ersten Mobilvermittlungseinheit MSC-A mit, dass die Funk-Zugangsverbindung umkonfiguriert ist und somit die Übertragung von Multimediadaten MD über den multimediadatenbasierten Kommunikationsdienst MKD erfolgen kann.

Um den geschilderten voreiligen Abbau der Nutzverbindung eines bestehenden ersten Kommunikationsdienstes KD bzw. des bestehenden sprachdatenbasierten Kommunikationsdienstes SKD zu vermeiden, wird erfindungsgemäß in der ersten Mobilvermittlungseinheit MSC-A eine den gewünschten zweiten Kommunikationsdienst bzw. den multimediadatenbasierten Kommunikätionsdienst MKD angebende Dienstsignalisierungsnachricht gebildet und an zumindest die zweite Mobilvermittlungseinheit MSC-B übertragen.

Die den gewünschten zweiten bzw. multimediadatenbasierten Kommunikationsdienst MKD angebende Dienstsignalisierungsnachricht veranlasst die zweite Mobilvermittlungseinheit MSC-B zu überprüfen, ob ein Wechsel auf den gewünschten zweiten Kommunikationsdienst bzw. den multimediadatenbasierten Kommunikationsdienst MKD möglich ist, insbesondere ob die aktuell verfügbaren Übertragungsressourcen zwischen der zweiten Mobilvermittlungseinheit MSC-B und dem zweiten mobilen Kommunikationsendgerät KB zum Aufbau des zweiten Kommunikationsdienst bzw. des multimediadatenbasierten Kommunikationsdienst MKD ausreichend sind. Ferner kann überprüft werden ob der zweite Kommunikationsteilnehmer dem gewünschten Wechsel des Kommunikationsdienstes KD zustimmt. Werden zum Wechsel ausreichend verfügbare Übertragungsressourcen durch die zweite Mobilvermittlungseinheit MSC-B ermittelt und liegt die Zustimmung des zweiten Kommunikationsteilnehmers B vor, so wird die zum Wechsel des Kommunikationsdienstes KD vorgesehene Signalisierung eingeleitet bzw. fortgesetzt.

In einer ersten Ausführungsform wird durch die zweite Mobilvermittlungseinheit MSC-B nach positiver Überprüfung der verfügbaren Übertragungsressourcen der Wechsel des Kommunikationsdienstes KD eingeleitet und die zur Umkonfiguration der Nutzverbindung erforderlichen Signalisierungsnachrichten erzeugt und an die zweite Zugangskontrollereinheit RNC-B und die zweite Media-Gateway-Einheit MGW-B übertragen.

In einer alternativen zweiten Ausführungsform der Erfindung wird nach positiver Überprüfung der verfügbaren Übertragungsressourcen in der zweiten Mobilvermittlungseinheit MSC-B eine weitere Dienstsignalisierungsnachricht erzeugt und diese an die erste Mobilvermittlungseinheit MSC-A übertragen. Hierdurch wird der ersten Mobilvermittlungseinheit MSC-A angezeigt, dass der gewünschte Wechsel des Kommunikationsdienstes KD möglich ist. Anschließend veranlasst die erste Mobilvermittlungseinheit MSC-A mittels der in den Figuren 1a,b dargestellten und hierzu vorgesehenen Signalisierungsschritte die Umkonfiguration der Nutzverbindung.

Besonders vorteilhaft wird in der ersten Ausführungsform die erste Dienstsignalisierungsnachricht als "Mid-Call Codec Negotiation"-Nachricht und eine weitere von der zweiten Mobilvermittlungseinheit MSC-B gebildete und an zumindest die erste Mobilvermittlungseinheit MSC-A übertragene Dienstsignalisierungsnachricht als "Modify to Selected Codec"- Nachricht ausgebildet, deren Aufbau im ITU-T-Standard Q.1902.4, Kap. 10.4 näher beschrieben ist. Durch die von der ersten Mobilvermittlungseinheit MSC-A erzeugte "Mid-Call Codec Negotiation"-Nachricht wird die zweite Mobilvermittlungseinheit MSC-B veranlasst, die Möglichkeit eines Wechsels des Kommunikationsdienstes KD zu überprüfen. Vorteilhaft ist hierzu die Unterbrechung der Nutzverbindung nicht erforderlich, vielmehr besteht die im Rahmen des bestehenden sprachdatenbasierten Kommunikationsdienstes SKD aufgebaute Nutzverbindung im Kommunikationsnetzwerk CN weiter.

In der "Mid-Call Codec Negotiation"-Nachricht wird von der ersten Mobilvermittlungseinheit MSC-A eine Codec-Liste eingefügt, die an Ihrer ersten Stelle den Multimediadatencodec Mu-Me aufweist. Die zweite Mobilvermittlungseinheit MSC-B wertet die empfangene "Mid-Call Codec Negotiation"-Nachricht und die in dieser übermittelte Codec-Liste aus. Hierbei zeigt der an erster Stelle der Codec-Liste angeführte Multimediadatencodec MuMe der zweiten Mobilvermittlungseinheit MSC-B an, dass von dem dem ersten Kommunikationsteilnehmer A zugeordneten Abschnitt des Kommunikationsnetzwerkes CN ein Wechsel von dem bestehenden sprachdatenbasierten Kommunikationsdienst SKD auf einen multimediadatenbasierten Kommunikationsdienst MKD gewünscht wird.

Durch die zweite Mobilvermittlungseinheit MSC-B wird daraufhin die Durchführbarkeit des geplanten Kommunikationsdienstewechsels überprüft. Hierzu wird durch die zweite Mobilvermittlungseinheit MSC-B mittels einer hierzu vorgesehenen Signalisierungsnachricht über das zweite mobile Kommunikationsendgerät KB der zweite Kommunikationsteilnehmers B befragt, ob er dem Wechsel des Kommunikationsdienstes KD zustimmt. Zusätzlich werden über die dem zweiten Kommunikationsteilnehmer B zugeordnete Zugangskontrollereinheit RNC-B die aktuell verfügbaren Übertragungsressourcen der über das zweite Zugangsnetz AN2 realisierten Funkschnittstelle ermittelt und diese der zweiten Mobilvermittlungseinheit MSC-B mitgeteilt. Abhängig von der Zustimmung des zweite Kommunikationsteilnehmers B und von den verfügbaren Übertragungsressourcen wird in der zweiten Mobilvermittlungseinheit MSC-B der ersten Mobilvermittlungseinheit MSC-A mittels einer weiteren Dienstesignalisierungsnachricht, und zwar einer "Modify to Selected Codec" Nachricht mitgeteilt, ob der Wechsel des Kommunikationsdienstes der zweiten Mobilvermittlungseinheit MSC-B unterstützt bzw. gewünscht wird oder nicht. Nach Empfang einer einen Kommunikationsdienstewechsel anzeigenden "Modify to Selected Codec"-Nachricht wird durch die erste Mobilvermittlungseinheit MSC-A das Umschalten der Nutzverbindung veranlasst.

Vor Übertragung der "Modify to Selected Codec"-Nachricht wird durch die zweite Mobilvermittlungseinheit MSC-B an die von dieser gesteuerte zweite Media-Gateway-Einheit MGW-B eine "Modify Bearer Characteristics"-Nachricht übertragen, über welche die Unterbrechung der Nutzverbindung initiiert wird. Insbesondere wird durch die Zuordnung des Multimediadatencodecs MuMe an den in der "Modify Bearer Characteristics"-Nachricht enthaltenen Parameter "New codec" der zweiten Media-Gateway-Einheit MGW-B angezeigt, dass die Nutzverbindung zukünftig für Multimediadaten MD genutzt werden soll, und mit Hilfe des dem Parameter "stream mode" zugeordneten Wertes "INACTIVE" die zweite Media-Gateway-Einheit MGW-B dazu veranlasst, die Nutzverbindung zu unterbrechen, um ein Fehlverhalten der Media-Gateway-Einheit MGW-B während des Umschaltvorgangs zu vermeiden.

Im Anschluss daran wird durch die zweite Mobilvermittlungseinheit MSC-B die "Modify to Selected Codec" Nachricht zurück an die erste Mobilvermittlungseinheit MSC-A gesendet. Darin ist dem Parameter "Selected Codec" der Multimediadatencodec MuMe zugeordnet. Ferner beinhaltet die "Modify to Selected Codec"-Nachricht die Codec-Liste mit dem "Selected Codec" Mu-Me und allen übrigen von der ersten Mobilvermittlungseinheit MSC-A vorgeschlagenen und von der zweiten Mobilvermittlungseinheit MSC-B und der beispielsweise einen Transitvermittlungseinheit MSC-T unterstützten Codecs.

Die "Modify to Selected Codec"-Nachricht kann über einen oder mehrere Transitvermittlungseinheiten Server-T von der zweiten Mobilvermittlungseinheit MSC-B zur ersten Mobilvermittlungseinheit MSC-A weitergeleitet werden. Nach Empfang der "Modify to Selected Codec"-Nachricht in der Transitvermittlungseinheit MSC-T bzw. der ersten Mobilvermittlungseinheit MSC-A wird durch diese die jeweils von Ihnen gesteuerte dritte bzw. erste Media-Gateway-Einheit MGW-T bzw. MGW-A über eine "Reserve Bearer Characteristics"-Nachricht und eine "Modify Bearer Characteristics"-Nachricht umkonfiguriert.

Der erfolgte Wechsel von dem sprachdatenbasierten Kommunikationsdienst SKD auf den multimediadatenbasierten Kommunikationsdienst MKD wird von der ersten Mobilvermittlungseinheit MSC-A durch Senden der "Successful Codec Modification"-Nachricht an die zweite Mobilvermittlungseinheit MSC-B angezeigt. Zusätzlich wird gesteuert durch die erste Mobilvermittlungseinheit MSC-A von der ersten Media-Gateway-Einheit MGW-A die Nutzverbindung wieder aufgebaut.

Analog hierzu wird nach Empfang der "Successful Codec Modification"-Nachricht in der Transitvermittlungseinheit MSC-T und der zweiten Mobilvermittlungseinheit MSC-B ebenfalls durch die diesen jeweils zugeordnete dritte bzw. zweite Media-Gateway-Einheit MGW-T bzw. MGW-B die Nutzverbindung wiederhergestellt.

Wurden von der zweiten Mobilvermittlungseinheit MSC-B eine Ablehnung des Wechsels durch den zweiten Kommunikationsteilnehmer oder nicht ausreichend verfügbare Übertragungsressourcen ermittelt, so dass der Wechsel des Kommunikationsdienstes KD nicht durchführbar ist, wird durch die zweite Mobilvermittlungseinheit MSC-B eine "Modify to Selected Codec"-Nachricht zurück an die erste Mobilvermittlungseinheit MSC-A gesendet. Unterschiedlich zu zuvor ist dem in der "Modify to Selected Codec"-Nachricht eingefügten Parameter "Selected Codec" ein Sprachdatencodec, beispielsweise AMR zugeordnet. Die Codec-Liste besteht wiederum aus dem Parameter "Selected Codec" und allen übrigen von der ersten Mobilvermittlungseinheit MSC-A vorgeschlagenen und von der zweiten Mobilvermittlungseinheit MSC-B und der beispielsweise einen Transitvermittlungseinheit MSC-T unterstützten Codecs.

Aufgrund der Übereinstimmung des in der "Modify to Selected Codec"-Nachricht enthaltenen Parameters "Selected Codec" mit dem aktuell in der ersten Mobilvermittlungseinheit MSC-A verwendeten Sprachdatencodec AMR, wird durch die erste Mobilvermittlungseinheit MSC-A eine Ablehnung des Kommunikationsdienstewechsels festgestellt. Daraufhin wird durch die erste Mobilvermittlungseinheit MSC-A die Signalisierungsprozedur durch Senden einer "Successful Codec Modification"-Nachricht beendet.

Aufgrund des unveränderten Wertes des Parameters "Selected Codec" erfolgt gemäß dem bestehendem BICC-Signalisierungsprotokoll keine Signalisierung an die erste bis dritte Media-Gateway-Einheiten MGW-A, MGW-B, MGW-T, d.h. die Nutzverbindung der bestehenden sprachdatenbasierten Kommunikationsverbindung SKD besteht weiterhin unverändert.

In einer alternativen zweiten Ausführungsform wird im Falle der Ablehnung eines Wechsels des Kommunikationsdienstes KD durch die zweite Mobilvermittlungseinheit MSC-B eine so genannte "Mid-Call Codec Negotiation Failure"-Nachricht an die erste Mobilvermittlungseinheit MSC-A übertragen. Gemäß bestehendem BICC Standard erfolgt analog zuvor keine Signalisierung an die erste bis dritte Media-Gateway-Einheiten MGW-A, MGW-B, MGW-T, d.h. die Nutzverbindung der bestehenden sprachdatenbasierten Kommunikationsverbindung SKD besteht weiterhin unverändert (siehe Figur 4).

Zur Überprüfung, ob die durch das zweite Zugangsnetz AN2 bereitgestellte Funkschnittstelle für den Aufbau des multimediadatenbasierten Kommunikationsdienst MKD ausreichende Übertragungsressourcen, beispielsweise einen Übertragungskanal mit einer Übertragungsrate von zumindest 64 kbit/s aufweist, werden durch die zweite Mobilvermittlungseinheit MSC-B Signalisierungsnachrichten mit der zweiten Zugangskontrollereinheit RNC-B ausgetauscht. Hierzu wird das standardisierte "Radio Access Network Application Part" (RANAP)-Signalisierungsprotokoll (siehe 3GPP TS 25.413) in abgewandelter Form verwendet.

Die zweite Mobilvermittlungseinheit MSC-B sendet eine "RAB Assignment Modify Request"-Nachricht an die zweite Zugangskontrollereinheit RNC-B, wobei die zweite Mobilvermittlungseinheit MSC-B die aktuell bestehende Konfiguration des Funk-Zugangsverbindung (engl. "radio access bearer", RAB), und zwar für Sprachdaten als gewünschte Konfiguration angibt. Zusätzlich wird die für die gewünschten Multimediadaten erforderliche Konfiguration als alternative Konfiguration mittels geeigneter RAB-Parameter mit angegeben.

Die "RAB Assignment Modify Request"-Nachricht und die darin enthaltenen RAB-Parameter sind standardisiert, jedoch wird erfindungsgemäß die "RAB Assignment Modify Request"-Nachricht mit einer neuen Semantik belegt. Bisher wurde die "RAB Assignment Modify Request"-Nachricht mit den genannten RAB-Parametern lediglich zu Umkonfiguration der Funk-Zugangsverbindungen verwendet. Erfindungsgemäß werden nun über die "RAB Assignment Modify Request"-Nachricht die aktuellen Übertragungsressourcen abgefragt, und zwar wird hierdurch ermittelt, ob für den gewünschten Wechsel des Kommunikationsdienstes KD alternative Funk-Zugangsverbindungen im zweiten Zugangsnetz AN2 verfügbar sind.

Die für die Steuerung des Verbindungsaufbaus im zweiten Zugangsnetz AN2 zuständige zweite Zugangskontrollereinheit RNC-B beantwortet die "RAB Assignment Modify RequeSt"-Nachricht gemäß bestehendem Standard mittels einer so genannten "RAB Assignment Modify Response"-Nachricht, in welcher ein die verfügbaren Übertragungsressourcen anzeigender Parameter ("MuMe RAB possible") enthalten ist.

Der Parameter ("MuMe RAB possible") zeigt an, dass ein Wechsel auf eine alternative Funk-Zugangsverbindung mit einer unterschiedlichen RAB-Konfiguration aktuell möglich ist. Zur Ermittlung der verfügbaren Übertragungsressourcen wird durch die zweite Zugangskontrollereinheit RNC-B geprüft, ob beispielsweise der implementierte Steuerfunktionsumfang, die gegebenen Verbindungsressourcen sowie deren Verbindungsqualität an der Funkschnittstelle für eine alternative RAB-Konfiguration ausreichen.

Hierbei ist im Rahmen eines netzwerkinitiierten Kommunikationsdienstewechsel durch die erste Mobilvermittlungseinheit MSC-A die Überprüfung der Funkschnittstelle zum zweiten Kommunikationsteilnehmers KB durch die zweite Mobilvermittlungseinheit MSC-B ausreichend, wohingegen bei einem nutzerinitiierten Kommunikationsdienstewechsel sowohl durch die erste als auch durch die zweite Mobilvermittlungseinheit.MSC-A, MSC-B die zuvor beschriebene Überprüfung der jeweils vorliegenden Funkschnittstelle vorgesehen wird.

Während beim Netzwerk-initierten Kommunikationsdienstwechsel das Verhalten des ersten oder zweiten mobilen Kommunikationsendgerät KA, KB bereits geeignet standardisiert ist, sieht das erfindungsgemäße Verfahren für den benutzerinitiierten Kommunikationsdienstewechsel auch eine Änderung des Verhaltens des ersten oder zweiten mobilen Kommunikationsendgerät KA, KB vor:

Bei einem netzwerkinitiierten Kommunikationsdienstewechsel zwischen dem ersten oder zweiten mobilen Kommunikationsendgerät KA, KB und der ersten bzw. zweiten Mobilvermittlungseinheit MSC-A, MSC-B vorgesehene Signalisierung ist bereits standardmäßig vorgegeben, dass eine Unterbrechung der Nutzverbindung und somit der Sprachübertragung des bestehenden Kommunikationsdienstes KD durch das erste oder zweite mobile Kommunikationsendgerät KA, KB nicht unmittelbar nach Empfang einer "Modify"-Nachricht vorgenommen wird, sondern erst dann, wenn durch das erste oder zweite mobile Kommunikationsendgerät KA, KB die zur Umkonfiguration der Funk-Zugangsverbindung für den multimediadatenbasierten Kommunikationsdienst MKD vorgesehenen Signalisierungsnachrichten empfangen werden.

Im Rahmen eines benutzerinitiierten Kommunikationsdienstewechsel wird durch das jeweilige mobile Kommunikationsendgerät KA, KB des ersten oder zweiten Kommunikationsteilnehmers A, B eine so genannte "MODIFY"-Nachricht an die zugeordnete Mobilvermittlungseinheit MSC-A, MSC-B gesendet, nach deren Senden gemäß dem aktuell standardisierten Signalisierungsverfahren durch das erste oder zweite mobile Kommunikationsendgerät KA, KB unmittelbar die Unterbrechung der Nutzverbindung eingeleitet wird.

Unterschiedlich hierzu wird beim erfindungsgemäßen Verfahren durch das betroffene mobile Kommunikationsendgerät KA, KB die Nutzverbindung nach dem Senden der "MODIFY"-Nachricht erst dann unterbrochen, wenn durch die erste bzw. zweite Mobilvermittlungseinheit MSC-A, MSC-B die Umkonfiguration der Funk-Zugangsverbindung für den multimediadatenbasierten Kommunikationsdienst MKD mittels der entsprechenden Signalisierungsnachrichten signalisiert wurde.

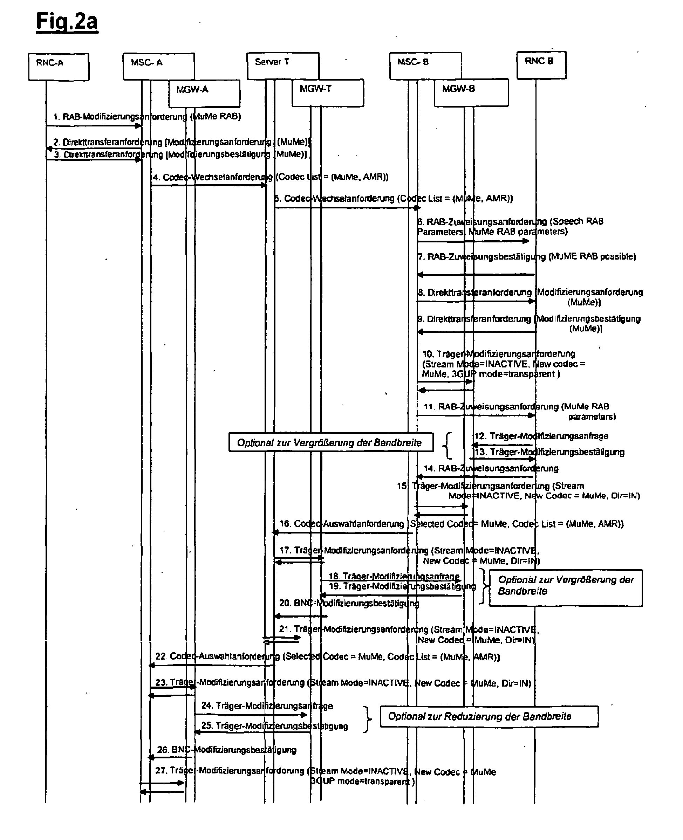

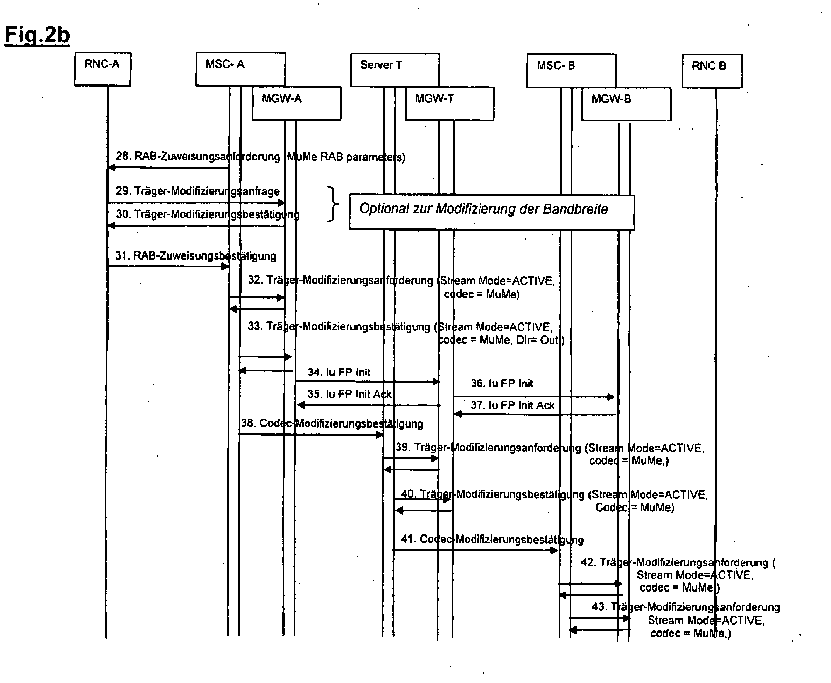

Die beschriebenen erfindungsgemäßen Abwandlungen des Signalisierungsverfahrens zum Wechsel des Kommunikationsdienstes innerhalb des mobilen Kommunikationssystems KS werden beispielhaft anhand der Figuren 2 bis 5 im Folgenden näher erläutert.

In den Figuren 2a,b ist der erfindungsgemäß verbesserte Signalisierungsverlauf bei einem netzwerkinitiierten Kommunikationsdienstewechsel von dem sprachdatenbasierten Kommunikationsdienst SKD auf den multimediadatenbasierten Kommunikationsdienst MKD dargestellt, wobei analog zu den Figuren 1a,b die zwischen den einzelnen Netzelementen des mobilen Kommunikationssystems KS ausgetauschten Signalisierungsnachrichten aufgeführt sind.

In einem ersten Schritt wird durch die erste Zugangskontrollereinheit RNC-A mittels einer "RAB Modify Request"-Nachricht der ersten Mobilvermittlungseinheit MSC-A mitgeteilt, dass ein Wechsel auf den gewünschten multimediadatenbasierten Kommunikationsdienst MKD möglich ist. Hierzu wird ein den multimediadatenbasierten Kommunikationsdienst MKD kennzeichnender RAB-Parameter "MuMe RAB" übermittelt.

Im zweiten Schritt wird durch die erste Mobilvermittlungseinheit MSC-A über eine "Direct Transfer"-Nachricht eine "Modify"-Nachricht an die erste Zugangskontrollereinheit RNC-A übertragen, welche diese an das erste mobile Kommunikationsendgerät KA des ersten Kommunikationsteilnehmers A weiterleitet. Hierdurch wird durch die erste Mobilvermittlungseinheit MSC-A der Wechsel von dem bestehenden sprachdatenbasierten Kommunikationsdienstes SKD auf den multimediadatenbasierten Kommunikationsdienst MKD vorgeschlagen.

Nach Zustimmung des ersten Kommunikationsteilnehmer A wird in einem dritten Schritt durch das erste mobile Kommunikationsendgerät KA des ersten Kommunikationsteilnehmers A eine so genannte "Modify Complete"-Nachricht erzeugt und an die ersten Zugangskontrollereinheit RNC-A übertragen. Die ersten Zugangskontrollereinheit RNC-A leitet diese "Modify Complete"-Nachricht mittels einer "Direct Transfer"-Nachricht an die erste Mobilvermittlungseinheit MSC-A weiter.

Die erste Mobilvermittlungseinheit MSC-A erzeugt erfindungsgemäß eine "Mid-Call Codec Negotiation"-Nachricht, welche zunächst in einem vierten Schritt an die Transitvermittlungseinheit Server-T weitergeleitet wird. Zur Überprüfung der Möglichkeit des Kommunikationsdienstewechsels ist in der "Mid-Call Codec Negotiation"-Nachricht die Codec-Liste eingefügt, welche an erster Stelle den Multimediadatencodec MuMe aufweist. Die Transitvermittlungseinheit Server-T leitet die "Mid-Call Codec Negotiation"-Nachricht an die zweite Mobilvermittlungseinheit MSC-B in einem fünften Schritt weiter.

In einem sechsten Signalisierungsschritt wird erfindungsgemäß durch die zweite Mobilvermittlungseinheit MSC-B - initiiert durch die empfangene "Mid-Call Codec Negotiation"-Nachricht - überprüft, ob die Funkschnittstelle des zweiten Zugangsnetzes AN2, über welches der zweite Kommunikationsteilnehmer B an das Kommunikationsnetzwerk CN angeschlossen ist, den Kommunikationsdienstewechsel unterstützt, und zwar bevor der geplante Kommunikationsdienstewechsel dem zweiten Kommunikationsteilnehmer B angezeigt wird. Hierdurch wird eine frühzeitige und gegebenenfalls mangels ausreichender Übertragungsressourcen überflüssige Benachrichtigung des zweiten Kommunikationsteilnehmers B vermieden.

Durch die zweite Mobilvermittlungseinheit MSC-B wird eine "RAB Assignment Modify Request"-Nachricht bezüglich der bereits aufgebauten Funk-Zugangsverbindung an die zweite Zugangskontrollereinheit RNC-B übertragen, wobei in der "RAB Assignment Modify Request"-Nachricht die aktuell bestehende Sprachdaten-Konfiguration als gewünschte Konfiguration ("Speech RAB parameters") angeben ist und die zur Übertragung von Multimediadaten MD erforderliche Konfiguration lediglich als alternative Konfiguration ("MuMe RAB parameters") aufgeführt wird.

Durch die zweite Zugangskontrollereinheit RNC-B wird überprüft, ob beispielsweise der Funktionsumfang, die verfügbaren Übertragungsressourcen sowie die verfügbare Verbindungsqualität an der durch die zweite Zugangseinheit AN2 bereitgestellten Funkschnittstelle für die alternative Konfiguration, d.h. die für die Übertragung von Multimediadaten MD erforderliche Konfiguration, ausreichend sind. Das Ergebnis der Überprüfung wird in einem siebten Signalisierungsschritt durch die zweite Zugangskontrollereinheit RNC-B mittels einer "RAB Assignment Modify Response"-Nachricht der zweiten Mobilvermittlungseinheit MSC-B erfindungsgemäß mitgeteilt, wobei hierzu in der "RAB Assignment Modify Response"-Nachricht ein die Möglichkeit eines Wechsels auf den multimediadatenbasierten Kommunikationsdienst MKD anzeigender Parameter ("MuMe RAB possible") vorgesehen wird.

Der achte Signalisierungsschritt betrifft die Übertragung einer "Modify"-Nachricht über eine "Direct Transfer"-Nachricht von der zweiten Mobilvermittlungseinheit MSC-B an die zweite Zugangskontrollereinheit RNC-B, welche die in die "Direct Transfer"-Nachricht eingebettete "Modify"-Nachricht an das zweite mobile Kommunikationsendgerät KB weiterleitet. Hierdurch wird dem zweiten Kommunikationsteilnehmer B der Wechsel des Kommunikationsdienstes KD vorgeschlagen, wobei zu diesem Zeitpunkt der Signalisierung bereits feststeht, dass die zum Anschluss des zweiten Kommunikationsteilnehmers B an das mobile Kommunikationssystem KS vorgesehene Funkschnittstelle den Aufbau eines multimediadatenbasierten Kommunikationsdienstes MKD unterstützt.

Nach Zustimmung des zweiten Kommunikationsteilnehmers B zum Kommunikationsdienstewechsel wird in einem neunten Schritt durch das zweite mobile Kommunikationsendgerät KB des zweiten Kommunikationsteilnehmers B eine "Modify Complete"-Nachricht an die zweite Zugangskontrollereinheit RNC-B gesendet, welche diese in eine "Direct Transfer"-Nachricht einbettet und an die zweite Mobilvermittlungseinheit MSC-B weiterleitet.

In einem zehnten Schritt bereitet die erste Mobilvermittlungseinheit MSC-B die zweite Media-Gateway-Einheit MGW-B auf den bevorstehenden Wechsel des Kommunikationsdienstes KD vor, wobei mittels einer "Modify Bearer Characteristics"-Nachricht die Nutzerverbindung unterbrochen wird, um während des Umschaltens ein Fehlverhalten zu vermeiden. Hierzu wird dem in der "Modify Bearer Characteristics"-Nachricht übermittelten Parameter "stream mode" der Wert "INACTIVE" zugewiesen. Somit wird die Nutzverbindung erst unterbrochen, nachdem der zweite Kommunikationsteilnehmer B seine Zustimmung zum Kommunikationswechsel abgegeben hat und die Verfügbarkeit der für einen Wechsel netzseitig erforderlichen Übertragungsressourcen gegeben ist.

Über eine in der zweiten Mobilvermittlungseinheit MSC-B erzeugte "RAB Assignment Modify Request"-Nachricht, welche an die zweite Zugangskontrollereinheit RNC-B übertragen wird, wird in einem elften Schritt die Umkonfiguration der Funk-Zugangsverbindung für Multimediadaten eingeleitet. Hierzu tauscht die zweite Zugangskontrollereinheit RNC-B über in den Figuren 2a,b nicht dargestellte weitere Signalisierungsnachrichten mit dem zweiten mobilen Kommunikationsendgerät KB des zweiten Kommunikationsteilnehmers B Signalisierungsparameter aus, um die Umkonfiguration der Funk-Zugangsverbindung vorzunehmen.

Optional können in einem zwölften und dreizehnten Signalisierungsschritt zwischen der zweiten Zugangskontrollereinheit RNC-B und der zweiten Media-Gateway-Einheit MGW-B Signalisierungsparameter ausgetauscht werden, über welche die Bandbreite der Nutzverbindung angepasst werden kann.

Nach Umkonfiguration der Funk-Zugangsverbindung wird die zweite Mobilvermittlungsstelle MSC-B von der zweiten Zugangskontrollereinheit RNC-B mittels einer "RAB Assignment Modify Response"-Nachricht in einem vierzehnten Schritt benachrichtigt und in einem fünfzehnten Schritt die Umkonfiguration durch den Austausch einer "Modify Bearer Characteristics"-Nachricht umgesetzt.

Daraufhin sendet die zweite Mobilvermittlungsstelle MSC-B in einem sechzehnten Schritt eine "Modify To Selected Codec"-Nachricht an die Transitvermittlungseinheit Server-T, um den Kommunikationsdienstewechsel zu veranlassen. Zur Umsetzung des Kommunikationsdienstewechsels wird in einem siebzehnten, zwanzigsten und einundzwanzigsten Signalisierungsschritt zunächst die dritte Media-Gateway-Einheit MGW-T durch die Transitvermittlungseinheit Server-T auf den bevorstehenden Wechsel des Kommunikationsdienstes vorbereitet und die Nutzverbindung unterbrochen. Hierzu werden eine "Reserve Bearer Characteristics"-Nachricht, eine "BNC Modified"-Nachricht sowie eine "Modify Bearer Characteristics"-Nachricht ausgetauscht.

Wiederum optional können in einem achtzehnten und neunzehnten Signalisierungsschritt zwischen der dritten Media-Gateway-Einheit MGW-T und der zweiten Media-Gateway-Einheit MGW-B Signalisierungsparameter ausgetauscht werden, über welche die Bandbreite der Nutzverbindung angepasst werden kann.

Anschließend wird durch die Transitvermittlungseinheit Server-T in einem zweiundzwanzigsten Schritt an die erste Mobilvermittlungseinheit MSC-A eine "Modify To Selected Codec"-Nachricht gesendet, um die Umsetzung des Kommunikationsdienstewechsels in der ersten Mobilvermittlungseinheit MSC-A anzustoßen.

Mittels des dreiundzwanzigsten, sechsundzwanzigsten und siebenundzwanzigsten Signalisierungsschrittes bereitet die erste Mobilvermittlungseinheit MSC-A die erste Media-Gateway-Einheit MGW-A auf den Dienstwechsel vor und unterbricht die Nutzverbindung. Hierzu werden wiederum eine "Reserve Bearer Characteristics"-Nachricht, eine "BNC Modified"-Nachricht sowie eine "Modify Bearer Characteristics"-Nachricht ausgetauscht.

Optional können mittels eines vierundzwanzigsten und fünfundzwanzigsten Signalisierungsschrittes Signalisierungsparameter zwischen der dritten Media-Gateway-Einheit MGW-T und der ersten Media-Gateway-Einheit MGW-A ausgetauscht werden, über welche die Bandbreite der Nutzverbindung angepasst werden kann.

Der achtundzwanzigste Signalisierungsschritt betrifft die Übertragung einer "RAB Assignment Modify Request"-Nachricht von der ersten Mobilvermittlungseinheit MSC A an die erste Zugangskontrollereinheit RNC-A, über welche die Umkonfiguration der Funk-Zugangsverbindung über das erste Zugangsnetz AN1 für Multimediadaten MD eingeleitet wird. Über in den Figuren 2a,b nicht dargestellte Signalisierungsnachrichten werden zur Umsetzung des Umkonfiguration zwischen der ersten Zugangskontrollereinheit RNC-A und dem ersten mobilen Kommunikationsendgerät KA des ersten Kommunikationsteilnehmers A Signalisierungsparameter ausgetauscht.

Über einen neunundzwanzigsten und dreißigsten Signalisierungsschritt können optional Signalisierungsparameter zwischen der ersten Zugangskontrollereinheit RNC-A und der ersten Media-Gateway-Einheit MGW-A ausgetauscht werden, über welche die Bandbreite der Nutzverbindung angepasst werden kann.

Durch Übersendung einer "RAB Assignment Modify Response"-Nachricht wird in einem einunddreißigsten Schritt der ersten Mobilvermittlungseinheit MSC-A durch die erste Zugangskontrollereinheit RNC-A mitgeteilt, dass die Funk-Zugangsverbindung umkonfiguriert ist.

Der zweiunddreißigste und dreiunddreißigste Signalisierungsschritt betreffen die Anweisung der ersten Media-Gateway-Einheit MGW-A durch die erste Mobilvermittlungseinheit MSC-A mittels einer "Modify Bearer Characteristics"-Nachricht und einer "Confirm Bearer Characteristics"-Nachricht, den Kommunikationsdienstewechsel vorzunehmen und die Nutzverbindung wieder durchzuschalten.

In einem vierunddreißigsten und fünfunddreißigsten Signalisierungsschritt werden zwischen der ersten Media-Gateway-Einheit MGW-A und der dritten Media-Gateway-Einheit MGW-T Signalisierungsparameter ausgetauscht, um das so genannte "Nb Framing Protokoll" für den Transport der Multimediadaten über die Nutzverbindung umzukonfigurieren. Analog hierzu erfolgt der Austausch von Signalisierungsparametern zwischen der dritten Media-Gateway-Einheit MGW-T und der zweiten Media-Gateway-Einheit MGW-B in einem sechsunddreißigsten und siebenunddreißigsten Signalisierungsschritt.

Zur Bestätigung des vollzogenen Kommunikationsdienstewechsels wird durch die erste Mobilvermittlungseinheit MSC-A in einem achtunddreißigsten Signalisierungsschritt eine "Successful Codec Modification"-Nachricht erzeugt und an die Transitvermittlungseinheit Server-T übertragen.

Daraufhin weist die Transitvermittlungseinheit Server-T die Media-Gateway-Einheit MGW-T mittels einer "Modify Bearer Characteristics"-Nachricht und einer "Confirm Bearer Characteristics"-Nachricht in einem neununddreißigsten und vierzigsten Signalisierungsschritt au, den Kommunikationsdienstewechsel vorzunehmen und die Nutzverbindung wieder durchzuschalten.

Im einundvierzigsten Signalisierungsschritt wird durch die Transitvermittlungseinheit Server-T an die zweite Mobilvermittlungseinheit MSC-B eine "Successful Codec Modification"-Nachricht gesendet, um dieser den Dienstwechsel zu bestätigen.

Mittels eines zweiundvierzigsten und dreiundvierzigsten Signalisierungsschritts wird die zweite Media-Gateway-Einheit MGW-B durch die zweite Mobilvermittlungseinheit MSC-A über eine "Modify Bearer Characteristics"-Nachricht angewiesen, den Kommunikationsdienstewechsel umzusetzen und hierzu die Nutzverbindung durchzuschalten. Die Durchführung wird der zweiten Mobilvermittlungseinheit MSC-A durch die Übersendung einer "Confirm Bearer Characteristics"-Nachricht bestätigt.

Somit wird die Nutzverbindung bei dem in den Figuren 2a,b dargestellten erfindungsgemäß abgewandelten Signalisierungsverfahren im Zeitraum zwischen dem zehnten und dreiundvierzigsten Schritt unterbrochen.

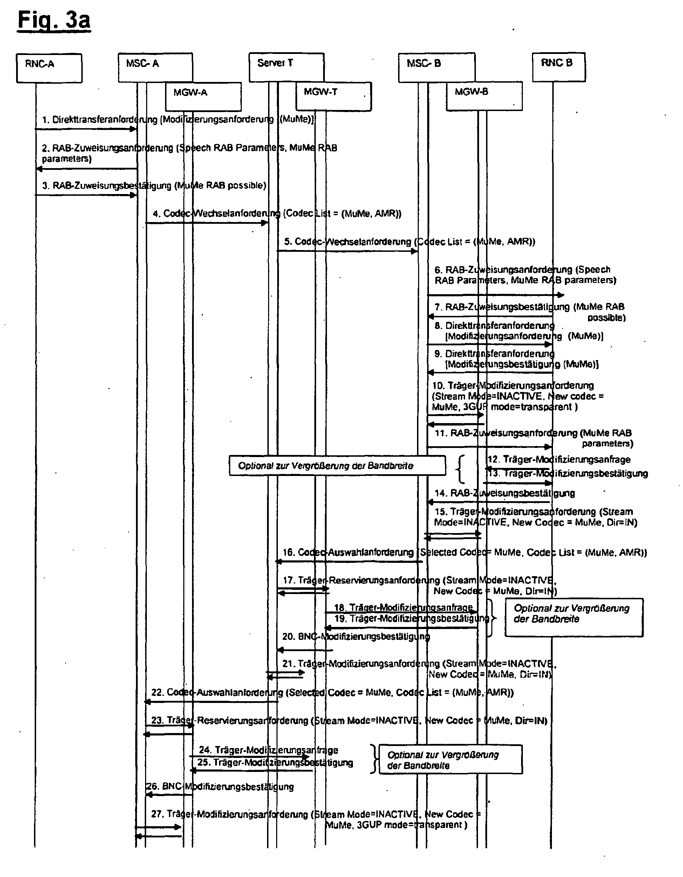

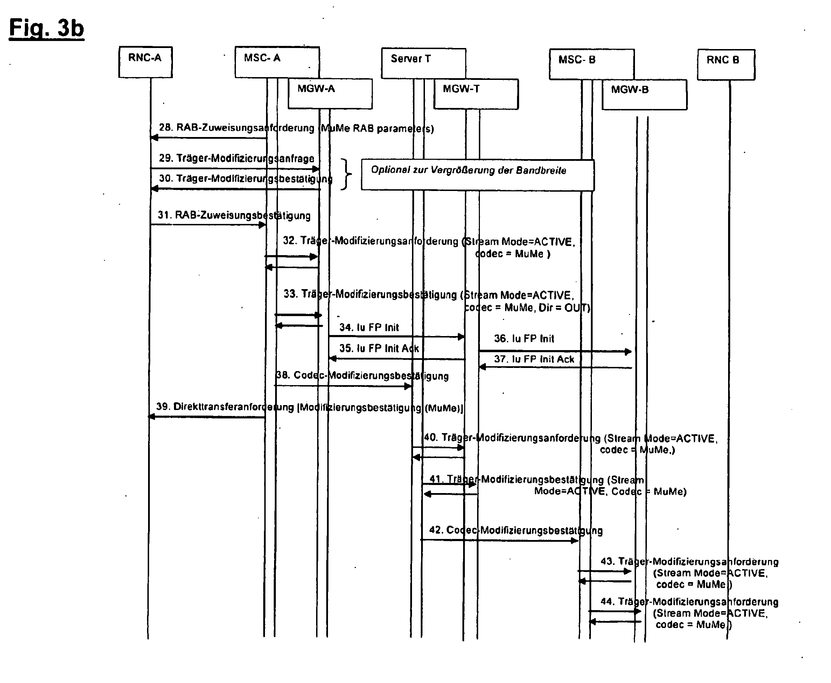

In den Figuren 3a,b ist der erfindungsgemäß verbesserte Signalisierungsverlauf bei einem benutzerinitiierten Wechsel von einem sprachdatenbasierten Kommunikationsdienst SKD auf einen multimediadatenbasierten Kommunikationsdienst MKD beispielhaft dargestellt. Der Signalisierungsverlauf stimmt größtenteils mit dem in den Figuren 2a,b dargestellten Signalisierungsverlauf überein, so dass im folgend lediglich auf die Unterschiede näher eingegangen wird.

Insbesondere wird bei dem in den Figuren 3a,b dargestellten benutzerinitiierten Wechsel vom ersten Kommunikationsteilnehmer A der Kommunikationsdienstewechsel angestoßen. Hierzu wird im ersten Signalisierungsschritt über das erste mobile Kommunikationsendgerät KA des ersten Kommunikationsteilnehmers A eine "Modify"-Nachricht erzeugt und an die erste Zugangskontrollereinheit RNC-A übertragen. Die erste Zugangskontrollereinheit RNC-A leitet diese mittels einer "Direct Transfer"-Nachricht an die erste Mobilvermittlungseinheit MSC-A weiter. Gemäß dem aktuell standardisierten Signalisierungsverfahren würde das erste mobile Kommunikationsendgerät KA unmittelbar nach dem Senden der "Modify"-Nachricht die Nutzverbindung unterbrechen, d.h. keine Daten in der Nutzverbindung mehr senden und empfangen. Unterschiedlich hierzu wird beim erfindungsgemäßen Verfahren durch das betroffene mobile Kommunikationsendgerät KA die Nutzverbindung nach dem Senden der-"MODIFY"-Nachricht erst dann unterbrochen, wenn durch die erste Mobilvermittlungseinheit MSC-A in Signalisierungsschritt achtundzwanzig die Umkonfiguration der Funk-Zugangsverbindung für den multimediadatenbasierten Kommunikationsdienst MKD mittels der entsprechenden Signalisierungsnachrichten signalisiert wurde.

Im zweiten Signalisierungsschritt wird erfindungsgemäß durch die erste Mobilvermittlungseinheit MSC-A - initiiert durch die empfangene "Modify"-Nachricht - überprüft, ob die Funkschnittstelle des ersten Zugangsnetzes AN1, über welches der erste Kommunikationsteilnehmer A an das Kommunikationsnetzwerk CN angeschlossen ist, den Kommunikationsdienstewechsel unterstützt, und zwar bevor eine "Mid-Call Codec Negotiation"-Nachricht an die Transitvermittlungseinheit Server-T gesendet wird. Hierdurch wird eine frühzeitige und gegebenenfalls mangels ausreichender Übertragungsressourcen überflüssige Benachrichtigung des zweiten Kommunikationsteilnehmers B vermieden. Der zweite und dritte Signalisierungsschritt in Figur 3a entspricht dem sechsten und siebten Signalisierungsschritt in Figur 2a.

Der folgende vierte bis achtunddreißigste Signalisierungsschritt werden analog zu den in den Figuren 2a,b dargestellten Signalisierungsschritten ausgebildet.

Unterschiedlich wird im neununddreißigsten Signalisierungsschritt von der ersten Mobilvermittlungseinheit MSC-A eingebettet in eine "Direct Transfer"-Nachricht eine "Modify Complete"-Nachricht an die erste Zugangskontrollereinheit RNC-A übertragen, welche diese an das erste mobile Kommunikationsendgerät KA des ersten Kommunikationsteilnehmers A weiterleitet. Darin bestätigt die erste Mobilvermittlungseinheit MSC-A den Wechsel des sprachdatenbasierten Kommunikationsdienst SKD auf den multimediadatenbasierten Kommunikationsdienst MKD. Der verbleibende in der Figur 3b dargestellte vierzigste bis vierundvierzigste Signalisierungsschritt entsprechen dem neununddreißigsten bis dreiundvierzigsten Schritt gemäß Figur 2b.

In einem weiteren Ausführungsbeispiel gemäß Figur 4 wird der erfingdungsgemäß verbesserte Signalisierungsverlauf für den Fall beschrieben, dass der netzwerkinitiierte Wechsel von einem sprachdatenbasierten auf einen multimediadatenbasierten Kommunikationsdienst SKD, MKD aufgrund mangelnder Übertragungsressourcen nicht durchführbar ist. Der erste bis sechste Signalisierungsschritt stimmen hierbei mit dem in Figur 2a dargestellten Signalisierungsverlauf überein.

Unterschiedlich hierzu wird jedoch im siebten Signalisierungsschritt in der von der zweiten Zugangskontrollereinheit RNC-B erzeugten "RAB Assignment Modify Response"-Nachricht ein die nicht ausreichenden Übertragungsressourcen anzeigender Parameter ("MuMe RAB not possible") verwendet und dies hiermit der zweiten Mobilvermittlungseinheit MSC-B mitgeteilt.

Durch die zweite Mobilvermittlungseinheit MSC-B wird in einem achten Schritt eine "Modify To Selected Codec"-Nachricht erzeugt und an die Transitvermittlungseinheit Server-T übertragen. Hierbei wird dem in der "Modify To Selected Codec"-Nachricht enthaltenen Parameter "selected codec" die Sprachdatenkennung AMR zugewiesen. Zugleich wird diese Sprachdatenkennung in der Codec-Liste auf den ersten Platz gesetzt. Zur Ablehnung des Kommunikationsdienstewechsels weist somit die zweite Mobilvermittlungseinheit MSC-B in der "Modify To Selected Codec"-Nachricht dem Parameter "Selected Codec" den bisher verwendeten Sprachcodec AMR zu.

Die "Modify To Selected Codec"-Nachricht wird in einem neunten Schritt von der Transitvermittlungseinheit Server-T an die erste Mobilvermittlungseinheit MSC-A weitergeleitet. Durch die erste Mobilvermittlungseinheit MSC-A wird anschließend in einem zehnten Schritt mittels einer "Direct Transfer"-Nachricht eine "Modify"-Nachricht an die erste Zugangskontrollereinheit RNC-A übertragen, die diese wiederum an das erste mobile Kommunikationsendgerät KA des ersten Kommunikationsteilnehmers A weiterleitet. Hiermit wird durch die erste Mobilvermittlungseinheit MSC-A der Wechsel auf den sprachdatenbasierten Kommunikationsdienst SKD vorgegeben, wobei bisher noch keine Unterbrechung der Nutzverbindung durch das erste mobile Kommunikationsendgerät KA erfolgt ist. Insbesondere wird durch das erste mobile Kommunikationsendgerät KA die Nutzverbindung für den sprachdatenbasierten Kommunikationsdienst SKD standardgemäß bis zu dem Zeitpunkt aufrechterhalten, bis die Funk-Zugangsverbindung umkonfiguriert wird.

Das erste mobile Kommunikationsendgerät KA bestätigt in einem elften Schritt mittels einer "Modify Complete"-Nachricht, die von der ersten Zugangskontrollereinheit RNC-A in eine "Direct Transfer"-Nachricht eingebettet wird und an die erste Mobilvermittlungseinheit MSC-A übertragen wird, den Wechsel zurück auf den sprachdatenbasierten Kommunikationsdienst SKD.

Anschließend wird durch die erste Mobilvermittlungseinheit MSC-A eine "Successful Codec Modification"-Nachricht erzeugt und in einem zwölften Schritt an die Transitvermittlungseinheit Server-T übertragen, über welche die Ablehnung des Kommunikationsdienstewechsels bestätigt wird. Die Transitvermittlungseinheit Server-T leitet die empfangene "Successful Codec Modification"-Nachricht an die zweite Mobilvermittlungseinheit MSC-B zum Abschluss des Signalisierungsverfahrens weiter.

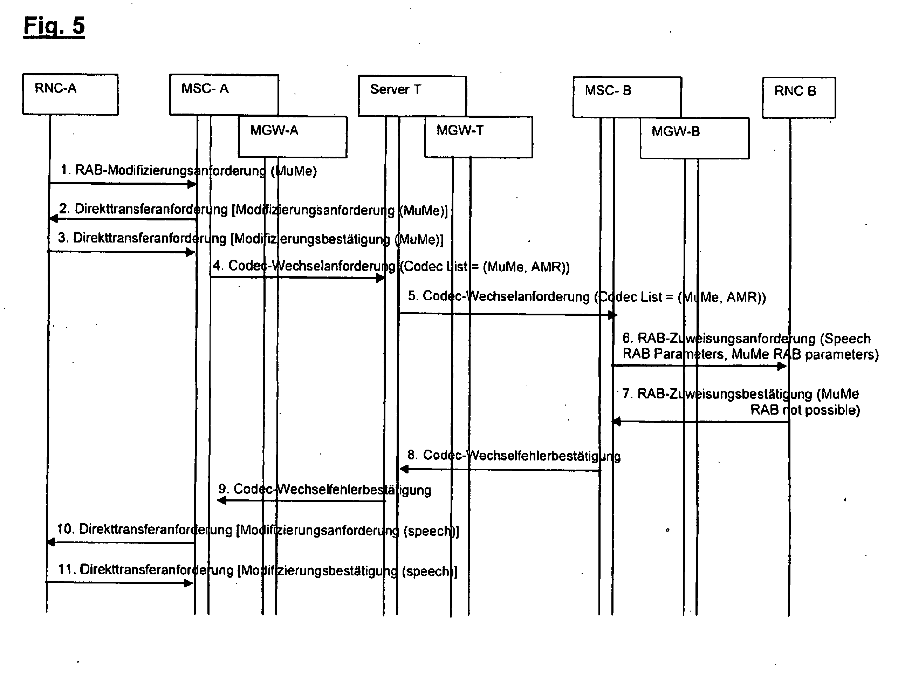

In Figur 5 ist eine alternative Signalisierungsvariante zu der mittels Figur 4 erläuterten Variante dargestellt, bei der ein netzwerkinitiierter Wechsel von einem sprachdatenbasierten auf einen multimediadatenbasierten Kommunikationsdienst SKD, MKD aufgrund mangelnder Übertragungsressourcen nicht durchführbar ist. Der Signalisierungsverlauf stimmt im Hinblick auf den ersten bis siebten Signalisierungsschritt mit dem in Figur 4 dargestellten Signalisierungsverlauf überein.

Unterschiedlich wird jedoch im achten Schritt durch die zweite Mobilvermittlungseinheit MSC-B an die Transitvermittlungseinheit Server-T eine "Mid-Call Codec Negotiation Failure"-Nachricht gesendet und diese in einem neunten Schritt an die erste Mobilvermittlungseinheit MSC-A weitergeleitet, um gegenüber der Transitvermittlungseinheit Server-T und gegenüber der ersten Mobilvermittlungseinheit MSC-A die Ablehnung des Kommunikationsdienstewechsels anzuzeigen. Der verbleibende zehnte und elfte Signalisierungsschritt entspricht wiederum den in Figur 4 dargestellten zehnten und elften Signalisierungsschritten.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrundeliegende Erfindungsgedanke verlassen wird.

### Bezugszeichenliste

- A: erster Kommunikationsteilnehmer
- AMR: Sprachdatencodec
- AN1: erstes Zugangsnetz
- AN2: zweites Zugangsnetz
- B: zweiter Kommunikationsteilnehmer
- CN: Kommunikationsnetzwerk
- KA: erstes mobiles Kommunikationsendgerät
- KB: zweites mobiles Kommunikationsendgerät
- KD: Kommunikationsdienst
- KS: mobiles Kommunikationssystem
- MD: Multimediadaten
- MGW-A: erste Media-Gateway-Einheit
- MGW-B: zweite Media-Gateway-Einheit
- MGW-T: dritte Media-Gateway-Einheit
- MKD: multimediadatenbasierter Kommunikationsdienst
- MSC-A: erste Mobilvermittlungseinheit
- MSC-B: zweite Mobilvermittlungseinheit
- MuMe: Multimediadatencodec
- RAB: RAB-Parameter
- RNC-A: erste Zugangskontrollereinheit
- RNC-B: zweite Zugangskontrollereinheit
- SD: Sprachdaten
- Server-T: Transitvermittlungseinheit
- SKD: sprachdatenbasierter Kommunikationsdienst

## Patentansprüche

1. Verfahren zum Wechsel von zumindest einem ersten Kommunikationsdienst (SKD) auf zumindest einen zweiten Kommunikationsdienst zur Übertragung von unterschiedlichen Dateninhalten in einem mobilen Kommunikationssystem (KS), bei dem der erste eine Nutzverbindung aufweisende Kommunikationsdienst (SKD) zwischen einem ersten mobilen Kommunikationsendgerät (KA) und einem zweiten mobilen Kommunikationsendgerät (KB) aufgebaut wird, wobei das erste mobile Kommünikationsendgerät (KA) zumindest einer ersten Mobilvermittlungseinheit (MSC-A) und das zweite mobile Kommunikationsendgerät (KB) zumindest einer zweiten Mobilvermittlungseinheit (MSC-B) des mobilen Kommunikationssystems (KS) zugeordnet ist,
**dadurch gekennzeichnet,**
**dass** zumindest in der ersten Mobilvermittlungseinheit (MSC-A) die Umsetzbarkeit des Wechsels ermittelt wird, dass bei einem positiven Ermittlungsergebnis in der ersten Mobilvermittlungseinheit (MSC-A) eine Aufforderung zur Überprüfung der Umsetzbarkeit des Wechsels auf den zweiten Kommunikationsdienst anzeigende Dienstsignalisierungsnachricht gebildet und zumindest an die zweite Mobilvermittlungseinheit (MSC-B) übertragen wird,
**dass** initiiert durch die in der zweiten Mobilvermittlungseinheit (MSC-B) empfangene Dienstsignalisierungsnachricht die Umsetzbarkeit des Wechsels auf den zweiten Kommunikationsdienst (MKD) ermittelt wird und
**dass** abhängig vom Ermittlungsergebnis in der zweiten Mobilvermittlungseinheit die Nutzverbindung zwischen dem ersten mobilen Kommunikationsendgerät (KA) und dem zweiten mobilen Kommunikationsendgerät (KB) unterbrochen und der Wechsel vom ersten Kommunikationsdienst (SKD) auf den zweiten Kommunikationsdienst eingeleitet wird.

2. Verfahren nach Anspruch 1,
**dadurch gekennzeichnet,**
**dass** zur Ermittlung der Umsetzbarkeit die Verfügbarkeit der für den Wechsel vom ersten Kommunikationsdienst (SKD) auf den zweiten Kommunikationsdienst erforderlichen Übertragungsressourcen bestimmt wird.

3. Verfahren nach Anspruch 1 oder 2,
**dadurch gekennzeichnet,**
**dass** zur Ermittlung der Umsetzbarkeit die Zustimmung oder Ablehnung zumindest eines ersten und/oder zweiten Kommunikationsteilnehmers (A, B) zu oder gegen den Wechsel auf den zweiten Kommunikationsdienst ermittelt wird.

4. Verfahren nach Ansprüchen 2 und 3,
**dadurch gekennzeichnet,**
**dass** die Verfügbarkeit der für den Wechsel vom ersten Kommunikationsdienst (SKD) auf den zweiten Kommunikationsdienst erforderlichen Übertragungsressourcen vor der Zustimmung oder Ablehnung des zweiten Kommunikationsteilnehmers (B) zu oder gegen den Wechsel auf den zweiten Kommunikationsdienst ermittelt wird.

5. Verfahren nach einem der Ansprüche 1 bis 4,
**dadurch gekennzeichnet,**
**dass** im Fall eines durch das erste mobile Kommunikationsendgerät (KA) initiierten Wechsels vom ersten Kommunikationsdienst (SKD) auf den zweiten Kommunikationsdienst die Verfügbarkeit der für den Wechsel erforderlichen Übertragungsressourcen in der ersten Mobilvermittlungseinheit (MSC-A) ermittelt wird, und zwar bei bestehender Nutzverbindung zwischen dem ersten mobilen Kommunikationsendgerät (KA) und dem zweiten mobilen Kommunikationsendgerät (KB) und
**dass** abhängig vom Ermittlungsergebnis der Wechsel vom ersten Kommunikationsdienst (SKD) auf den zweiten Kommunikationsdienst eingeleitet wird.

6. Verfahren nach einem der Ansprüche 1 bis 5,
**dadurch gekennzeichnet,**
**dass** der erste Kommunikationsdienst (SKD) zwischen dem ersten Kommunikationsteilnehmer (A) und dem zweiten Kommunikationsteilnehmer (B) aufgebaut wird, wobei das erste mobile Kommunikationsendgerät (KA) dem ersten Kommunikationsteilnehmer (A) und das zweite mobile Kommunikationsendgerät (KB) dem zweiten Kommunikationsteilnehmer (B) zugeordnet ist.

7. Verfahren nach einem der Ansprüche 1 bis 6,
**dadurch gekennzeichnet,**
**dass** der erste Kommunikationsdienst (SKD) zur Übertragung von Sprachdaten (SD) als sprachdatenbasierter Kommunikationsdienst (SKD) ausgebildet wird.

8. Verfahren nach einem der Ansprüche 1 bis 7,
**dadurch gekennzeichnet,**
**dass** der zweite Kommunikationsdienst zur Übertragung von Multimediadaten als multimediadatenbasierter Kommunikationsdienst ausgebildet wird.

9. Verfahren nach einem der Ansprüche 1 bis 8,
**dadurch gekennzeichnet,**
**dass** die Dienstsignalisierungsnachricht durch eine "Mid-Call Codec Negotiation"-Nachricht gemäß dem "Bearer Independent Call Control"-Signalisierungsprotokoll ITU-T Q.1902.4 gebildet wird.

10. Verfahren nach Anspruch 9,
**dadurch gekennzeichnet,**
**dass** in der "Mid-Call Codec Negotiation"-Nachricht eine Codec-Liste übertragen wird, in der zumindest ein dem ersten Kommunikationsdienst (SKD) zugeordneter Codec und zumindest ein dem zweiten Kommunikationsdienst zugeordneter Codec eingefügt wird.

11. Verfahren nach Anspruch 10,
**dadurch gekennzeichnet,**
**dass** in der Codec-Liste zumindest ein dem multimediadatenbasierten Kommunikationsdienst zugeordneter Multimediadatencodec (MuMe) eingefügt wird.

12. Verfahren nach Anspruch 11,
**dadurch gekennzeichnet,**
**dass** in der Codec-Liste zumindest ein dem sprachdatenbasierten Kommunikationsdienst (SKD) zugeordneter Sprachdatencodec eingefügt wird.

13. Verfahren nach Anspruch 11 oder 12,
**dadurch gekennzeichnet,**
**dass** der Multimediadatencodec an die erste Stelle der Codec-Liste eingetragen wird.

14. Verfahren nach einem der Ansprüche 1 bis 13,
**dadurch gekennzeichnet,**
**dass** nach Ermittlung der Umsetzbarkeit durch die zweite Mobilvermittlungseinheit (MSC-B) unmittelbar die Umkonfiguration der für den Wechsel des Kommunikationsdienstes (KD) erforderlichen Nutzverbindung eingeleitet wird.

15. Verfahren nach einem der Ansprüche 1 bis 14,
**dadurch gekennzeichnet,**
**dass** nach Ermittlung der Umsetzbarkeit von der zweiten Mobilvermittlungseinheit (MSC-B) eine weitere Dienstsignalisierungsnachricht erzeugt und an die erste Mobilvermittlungseinheit (MSC-A) übertragen wird, durch welche die Umkonfiguration der für den Wechsel des Kommunikationsdienstes (KD) erforderlichen Nutzverbindung eingeleitet wird.

16. Verfahren nach einem der Ansprüche 1 bis 13,
**dadurch gekennzeichnet,**
**dass** nach Ermittlung der Umsetzbarkeit von der zweiten Mobilvermittlungseinheit (MSC-B) eine weitere Dienstsignalisierungsnachricht erzeugt und an die erste Mobilvermittlungseinheit (MSC-A) übertragen wird, durch welche die Umsetzbarkeit des Wechsel zu Kommunikationsdienstes (KD) angezeigt wird.

17. Verfahren nach Anspruch 16,
**dadurch gekennzeichnet,**
**dass** nach Erhalt der weiteren Dienstsignalisierungsnachricht die erste Mobilvermittlungseinheit (MSC-A) im Falle der Umsetzbarkeit des Wechsels die Umkonfiguration der Nutzverbindung einleitet.

18. Verfahren nach Anspruch 15 oder 16,
**dadurch gekennzeichnet,**
**dass** in die weitere Dienstsignalisierungsnachricht ein die Umsetzbarkeit anzeigender Signalisierungsparameter eingefügt wird.

19. Verfahren nach Anspruch 15,
**dadurch gekennzeichnet,**
**dass** die weitere Dienstsignalisierungsnachricht durch eine "Modify to Selected Codec"-Nachricht gemäß dem "Bearer Independent Call Control"-Signalisierungsprotokoll ITU-T Q.1902.4 gebildet wird.

20. Verfahren nach einem der Ansprüche 18 bis 19,
**dadurch gekennzeichnet,**
**dass** als die Umsetzbarkeit anzeigender Signalisierungsparameter ein dem zweiten Kommunikationsdienst zugeordneter "Codec" aus der über die "Mid-Call Codec Negotiation"-Nachricht übermittelten Codec-Liste ausgewählt wird.

21. Verfahren nach Anspruch 20,
**dadurch gekennzeichnet,**
**dass** der ersten Mobilvermittlungseinheit (MSC-A) durch die Auswahl eines Multimediadatencodecs die Umsetzbarkeit des Wechsels vom sprachdatenbasierten Kommunikationsdienst (SKD) auf den multimediadatenbasierten Kommunikationsdienst und durch Auswahl des Sprachdatencodecs eine Ablehnung des Wechsels angezeigt wird.

22. Verfahren nach einem der Ansprüche 1 bis 21,
**dadurch gekennzeichnet,**
**dass** das Verfahren zum Wechsel des Kommunikationsdienstes (KD) durch den ersten oder zweiten Kommunikationsteilnehmer oder eine der diesen zugeordneten ersten oder zweiten Mobilvermittlungseinheit (MSC-A, MSC-B) eingeleitet wird.

23. Verfahren nach einem der Ansprüche 1 bis 22,
**dadurch gekennzeichnet,**
**dass** der erfolgte Wechsel des Kommunikationsdienstes (KD) von der ersten Mobilvermittlungseinheit (MSC-A) mittels einer "Successful Codec Modification"-Nachricht gemäß dem "Bearer Independent Call Control"-Signalisierungsprotokoll ITU-T Q.1902.4 der zweiten Mobilvermittlungseinheit (MSC-B) angezeigt wird.

24. Verfahren nach einem der Ansprüche 1 bis 23,
**dadurch gekennzeichnet,**
**dass** zur Übertragung der ersten oder der weiteren Signalisierungsnachrichten zwischen der ersten Mobilvermittlungseinheit (MSC-A) und der zweiten Mobilvermittlungseinheit (MSC-B) diese jeweils über eine oder mehrere Transitvermittlungseinheiten (Server-T) weitergeleitet werden.

25. Verfahren nach einem der Ansprüche 19 bis 24,
**dadurch gekennzeichnet,**
**dass** in der ersten Mobilvermittlungseinheit (MSC-A) der in der "Modify to Selected Codec"-Nachricht übertragene ausgewählte Codec ausgewertet wird und bei Übereinstimmung des ausgewählten Codecs mit dem aktuell in der ersten Mobilvermittlungseinheit (MSC-A) vorliegenden Codec eine Ablehnung des Kommunikationsdienstewechsels festgestellt wird.

26. Verfahren nach Anspruch 15 oder 16,
**dadurch gekennzeichnet,**
**dass** im Falle der Ablehnung des Wechsels des Kommunikationsdienstes (KD) durch die zweite Mobilvermittlungseinheit (MSC-B) als weitere Dienstesignalisierungsnachricht eine "Mid-Call Codec Negotiation Failure"-Nachricht an die erste Mobilvermittlungseinheit (MSC-A) übertragen wird.

27. Verfahren nach einem der Ansprüche 1 bis 26,
**dadurch gekennzeichnet,**
**dass** zur Ermittlung der Verfügbarkeit der für den Wechsel vom ersten Kommunikationsdienst (SKD) auf den zweiten Kommunikationsdienst erforderlichen Übertragungsressourcen eine Signalisierungsnachricht von der Mobilvermittlungsstelle (MSC-A, MSC-B) an die dem mobilen Kommunikationsendgerätes (KA,KB) zugeordnete Zugangskontrollereinheit (RNC-A,RNC-B) übertragen wird, und
**dass** initiiert durch die empfangene Signalisierungsnachricht durch die Zugangskontrollereinheit ermittelt wird, ob die für den Aufbau des zweiten Kommunikationsdienstes erforderlichen Funkübertragungsressourcen verfügbar sind.

28. Verfahren nach Anspruch 27,
**dadurch gekennzeichnet,**
**dass** als Signalisierungsnachricht eine gemäß dem "Radio Access Network Application Part" -Signalisierungsprotokoll ausgebildete "RAB Assignment Modify Request"-Nachricht verwendet wird.

29. Verfahren nach Anspruch 28,
**dadurch gekennzeichnet,**
**dass** initiiert durch die empfangene "RAB Assignment Modify Request"-Nachricht in der Zugangskontrollereinheit (RNC-A, RNC-B) die Verfügbarkeit von Funkübertragungsressourcen zum zweiten mobilen Kommunikationsendgerätes (KB) ermittelt werden.

30. Verfahren nach einem der Ansprüche 27 bis 29,
**dadurch gekennzeichnet,**
**dass** durch die Zugangskontrollereinheit (RNC-A, RNC-B) eine weitere Signalisierungsnachricht erzeugt wird, über welche der jeweils zugeordneten Mobilvermittlungsstelle (MSC-A, MSC-B) die Verfügbarkeit der zum Aufbau des zweiten Kommunikationsdienstes erforderlichen Funkübertragungsressourcen mitgeteilt wird.

31. Verfahren nach Anspruch 30,
**dadurch gekennzeichnet,**
**dass** als weitere Signalisierungsnachricht eine gemäß dem "Radio Access Network Application Part" - Signalisierungsprotokoll ausgebildete "RAB Assignment Modify Response"-Nachricht verwendet wird.

32. Verfahren nach einem der Ansprüche 1 bis 31,
**dadurch gekennzeichnet,**
**dass** im Rahmen eines benutzerinitiierten Wechsels von dem ersten Kommunikationsdienst (SKD) auf den zweiten Kommunikationsdienst die Unterbrechung der Nutzverbindung durch das jeweilige mobile Kommunikationsendgerät (KA, KB) im Anschluss an die Übersendung einer "Modify"-Nachricht an die zugeordnete Mobilvermittlungseinheit (MSC-A, MSC-B) abhängig davon vorgenommen wird, ob durch das zugeordnete Mobilvermittlungseinheit (MSC-A, MSC-B) dem jeweiligen mobile Kommunikationsendgerät (KA, KB) eine Umkonfiguration der Funk-Zugangsverbindung signalisiert wird.

33. Mobilvermittlungseinheit (MSC-A, MSC-B) für ein mobiles
Kommunikationssystem (KS) zur Durchführung eines benutzerinitiierten Wechsels von zumindest einem ersten eine Nutzverbindung aufweisenden Kommunikationsdienst (SKD) auf zumindest einen zweiten Kommunikationsdienst (MKD) welche derart eingerichtet ist, dass die in der Mobilvermittlungseinheit durchzuführenden Schritte des Verfahrens nach einem der Ansprüche 1 bis 32 durchführbar sind.

## Claims

1. Method for switching from at least one communication service (SKD) to at least one second communication service for transmission of different data content in a mobile communication system (KS), in which the first communication service (SKD) having a payload connection is established between a first mobile communication terminal (KA) and a second mobile communication terminal (KB), wherein the first mobile communication terminal (KA) is assigned to a first mobile switching centre (MSC-A) and the second mobile communication terminal (KB) is assigned to at least one second mobile switching centre (MSC-B) of the mobile communication system (KS),
**characterised in that,**
it is determined at least in the first mobile switching centre (MSC-A) whether the switch can be implemented, in the event of a positive determination result in the first mobile switching centre (MSC-A) a service signalling message indicating a request to check whether the switch to the second communication service can be implemented is formed and transferred at least to the second mobile switching centre (MSC-B),
initiated by the service signalling message received in the second mobile switching centre (MSC-B), it is determined whether the switch to the second communication service (MKD) can be determined and
depending on the result of the determination in the second mobile switching centre, the payload connection between the first mobile communication terminal (KA) and the second mobile communication terminal (KB) is interrupted and the switch from the first communication service (SKD) to the second communication service is initiated.

2. Method according to claim 1,
**characterised in that,**
to determine whether the switch can be implemented, the availability of the transmission resources required for the switch from the first communication service (SKD) to the second communication service is determined.

3. Method according to claim 1 or 2,
**characterised in that,**
to determine whether the switch can be implemented the agreement to or rejection by at least a first and/or second communication user (A, B) of the switch to the communication service is determined.

4. Method according to claim 2 and 3,
**characterised in that**
the availability of the transmission resources required for the switch from the first communication service (SKD) to the second communication service is determined before the second communication user (B) accepts or rejects the change to the second communication service.

5. Method according to one of claims 1 to 4, **characterised in that,**
in the event of a change from the first communication service (SKD) to the second communication service initiated by the first mobile communication terminal (KA), the availability of the transmission resources required for the switch is determined in the first mobile switching centre (MSC-A), and this is done even if there an existing payload connection between the first mobile communication terminal (KA) and the second mobile communication terminal (KB) and that, depending on the determination result the switch is initiated from the first communication service (SKD) to the second communication service.

6. Method according to one of claims 1 to 5, **characterised in that**
the first communication service (SKD) is established between the first communication user (A) and the second communication user (B), wherein the first mobile communication terminal (KA) is assigned to the first communication user (A) and the second mobile communication terminal (KB) to the second communication user (B).

7. Method according to one of claims 1 to 6, **characterised in that**
the first communication service (SKD) is embodied for transmission of voice data (SD) as a voice data-based communication service (SKD).

8. Method according to one of claims 1 to 7, **characterised in that**
the second communication service is embodied for transmission of multimedia data as a multimedia data-based communication service.

9. Method according to one of claims 1 to 8, **characterised in that**
the service signalling message is formed by a "Mid-Call Codec Negotiation" messages in accordance with the "Bearer Independent Call Control" signalling protocol ITU-T Q.1902.4.

10. Method according to claim 9,
**characterised in that,**
in the "Mid-Call Codec Negotiation" message a codec list is transmitted into which at least one codec assigned to the first communication service (SKD) and at least one codec assigned to the second communication service is inserted.

11. Method according to claim 10,
**characterised in that**
at least one multimedia (MuMe) data codec assigned to the multimedia data-based communication service is inserted into the codec list.

12. Method according to claim 11,
**characterised in that**
at least one voice data codec assigned to the voice data-based communication service (SKD) is inserted into the codec list.

13. Method according to claim 11 or 12,
**characterised in that,**
the multimedia data codec is entered at the first location of the codec list.

14. Method according to one of claims 1 to 13, **characterised in that,**
after the second mobile switching centre (MSC-B) has determined whether the switch is able to be implemented, the reconfiguration of the payload connection necessary for the switch of communication service (KD) is initiated.

15. Method according to one of claims 1 to 14, **characterised in that,**
after the second mobile switching centre (MSC-B) has determined whether the switch is able to be implemented, a further service signalling message is generated and transmitted to the first mobile switching centre (MSC-A), through which the reconfiguration of the payload connection necessary for the switch of communication service (KD) is initiated.

16. Method according to one of claims 1 to 13, **characterised in that,**
after the second mobile switching centre (MSC-B) has determined whether the switch is able to be implemented, a further service signalling message is generated and transmitted to the first mobile switching centre (MSC-A), which indicates whether the switch can be made to the communication service (KD).

17. Method according to claim 16,
**characterised in that,**
after receipt of the further service signalling message, if the switch is able to be implemented, the first mobile switching centre (MSC-A) initiates the reconfiguration of the payload connection.

18. Method according to claim 15 or 16,
**characterised in that,**
a signalling parameter indicating whether the switch is able to be implemented is inserted into the further service signalling message.

19. Method according to claim 15,
**characterised in that**
the further service signalling message is formed by a "Modify to Selected Codec" message according to the "Bearer Independent Call Control" signalling protocol ITU-T Q.1902.4.

20. Method according to one of claims 18 to 19, **characterised in that**
a codec assigned to the second communication service from the codec list transferred via the "Mid-Call Codec Negotiation" message is selected as the signalling parameter indicating that the switch can be implemented.

21. Method according to claim 20,
**characterised in that**
it is indicated to the first mobile switching centre (MSC-A) that the switch from the voice data-based communication service (SKD) can be implemented by the selection of a multimedia data codec and it is indicated that the switch is rejected by selection of a voice data codec.

22. Method according to one of claims 1 to 21, **characterised in that**
the method for switching the communication service (KD) is initiated by the first or second communication user or by a first or second mobile switching centre (MSC-A, MSC-B) assigned to said users.

23. Method according to one of claims 1 to 22, **characterised in that,**
the successful switch of the communication service (KD) from the first mobile switching centre (MSC-A) is indicated to the second mobile switching centre (MSC-B) by means of a "Successful Codec Modification" message in accordance with the "Bearer Independent Call Control" signalling protocol ITU-T Q.1902.4.

24. Method according to one of claims 1 to 23, **characterised in that,**
for transmission of the first or of the further signalling messages between the first mobile switching centre (MSC-A) and the second mobile switching centre (MSC-B), said messages are forwarded in each case via one or more transit switching units (Server-T).

25. Method according to one of claims 19 to 24, **characterised in that**
the selected codec transferred in the "Modify to Selected Codec" message is evaluated in the first mobile switching centre (MSC-A) and, if the selected codec matches the current codec present in the first mobile switching centre (MSC-A) a rejection of the communication service change is established.

26. Method according to claim 15 or 16,
**characterised in that,**
in the event of the switch of communication service (KD) being rejected by the second mobile switching centre (MSC-B), a "Mid-Call Codec Negotiation Failure" message is transmitted to the first mobile switching centre (MSC-A) as a further service signalling message.

27. Method according to one of claims 1 to 26, **characterised in that,**
to determine the availability of the transmission resources required for the switch from the first communication service (SKD) to the second communication service, a signalling message is transmitted from the mobile switching centre (MSC-A, MSC-B) to the radio network controller (RNC-A, RNC-B) assigned to the mobile communication terminal (KA, KB), and
the radio network controller initiates a process to determine whether the radio transmission resources required to establish the second communication service are available.

28. Method according to claim 27,
**characterised in that**
an "RAB Assignment Modify Request" message embodied in accordance with the "Radio Access Network Application Part" signalling protocol is used as the signalling message.

29. Method according to claim 28,
**characterised in that**,
initiated by the received "RAB Assignment Modify Request" message, the availability of radio transmission resources for the second mobile communication terminal (KB) in the radio network controller (RNC-A, RNC-B) is determined.

30. Method according to one of claims 27 to 29, **characterised in that**
a further signalling message is generated by the radio network controller (RNC-A, RNC-B), via which the respective assigned mobile switching centre (MSC-A, MSC-B) is informed about the availability of the radio transmission resources required for establishing the second communication service.

31. Method according to claim 30,
**characterised in that**,
a "RAB Assignment Modify Response" message embodied in accordance with the "Radio Access Network Application Part" signalling protocol is used as the further signalling message.

32. Method according to one of claims 1 to 31, **characterised in that**,
within the framework of a user-initiated switch from the first communication service (SKD) to the second communication service, the interruption of the payload connection by the respective mobile communication terminal (KA, KB) is undertaken subsequent to the transmission of a "Modify" message to the assigned mobile switching centre (MSC-A, MSC-B) as a function of whether a reconfiguration of the radio access connection is signalled by the mobile switching centre (MSC-A, MSC-B) to the respective mobile communication terminal (KA, KB).

33. A mobile switching centre (MSC-A, MSC-B) for a mobile communication system (KS) for carrying out a user-initiated switch from at least one communication service (SKD) having a payload connection to at least one second communication service (MKD) which is configured such that the steps of the method to be performed in the mobile switching centre are able to be performed in accordance with one of claims 1 to 32.

## Revendications

1. Procédé pour passer d'au moins un premier service de communication (SKD) à au moins un deuxième service de communication pour transmettre des contenus de données différents dans un système de communication mobile (KS), dans lequel le premier service de communication (SKD) présentant une liaison utile est établi entre un premier terminal de communication mobile (KA) et un deuxième terminal de communication mobile (KB), le premier terminal de communication mobile (KA) étant associé au moins à une première unité de commutation mobile (MSC-A) et le deuxième terminal de communication mobile (KB) étant associé au moins à une deuxième unité de commutation mobile (MSC-B) du système de communication mobile (KS),
**caractérisé en ce que** :
- la possibilité de réaliser la commutation est déterminée au moins dans la première unité de commutation mobile (MSC-A) ;
- dans le cas d'un résultat positif de la détermination, dans la première unité de commutation mobile (MSC-A), un message de signalisation de service signalant une invitation à vérifier la possibilité de réalisation du passage au deuxième service de communication est formé et est transmis au moins à la deuxième unité de commutation mobile (MSC-B) ;
- sur déclenchement par le message de signalisation de service reçu dans la deuxième unité de commutation mobile (MSC-B), la possibilité de réalisation du passage au deuxième service de communication (MKD) est déterminée ; et
- en fonction du résultat de la détermination, dans la deuxième unité de commutation mobile, la liaison utile entre le premier terminal de communication mobile (KA) et le deuxième terminal de communication mobile (KB) est interrompue et le passage du premier service de communication (SKD) au deuxième service de communication est initialisé.

2. Procédé selon la revendication 1, **caractérisé en ce que**, pour déterminer la possibilité de réalisation, on définit la disponibilité des ressources de transmission requises pour le passage du premier service de communication (SKD) au deuxième service de communication.

3. Procédé selon la revendication 1 ou 2, **caractérisé en ce que**, pour déterminer la possibilité de réalisation, on détermine le consentement au ou le refus contre le passage au deuxième service de communication par au moins un premier et/ou un deuxième participant à la communication (A, B).

4. Procédé selon les revendications 2 et 3, **caractérisé en ce qu'**on détermine la disponibilité des ressources de transmission requises pour le passage du premier service de communication (SKD) au deuxième service de communication avant le consentement au ou le refus contre le passage au deuxième service de communication par le deuxième participant à la communication (B).

5. Procédé selon l'une des revendications 1 à 4, **caractérisé en ce que**, dans le cas d'un passage du premier service de communication (SKD) au deuxième service de communication, déclenché par le premier terminal de communication mobile (KA), la disponibilité des ressources de transmission requises pour ce passage est déterminée dans la première unité de commutation mobile (MSC-A), et ce, en présence d'une liaison utile entre le premier terminal de communication mobile (KA) et le deuxième terminal de communication mobile (KB), et **en ce que** le passage du premier service de communication (SKD) au deuxième service de communication est initialisé en fonction du résultat de la détermination.

6. Procédé selon l'une des revendications 1 à 5, **caractérisé en ce que** le premier service de communication (SKD) est établi entre le premier participant à la communication (A) et le deuxième participant à la communication (B), le premier terminal de communication mobile (KA) étant associé au premier participant à la communication (A) et le deuxième terminal de communication mobile (KB) étant associé au deuxième participant à la communication (B).

7. Procédé selon l'une des revendications 1 à 6, **caractérisé en ce que** le premier service de communication (SKD) pour la transmission de données vocales (SD) se présente sous la forme d'un service de communication (SKD) basé sur des données vocales.

8. Procédé selon l'une des revendications 1 à 7, **caractérisé en ce que** le deuxième service de communication pour la transmission de données multimédia se présente sous la forme d'un service de communication basé sur des données multimédia.

9. Procédé selon l'une des revendications 1 à 8, **caractérisé en ce que** le message de signalisation de service est formé par un message « Mid-Call Codec Negotiation » conformément au protocole de signalisation « Bearer Independent Call Control » Q.1902.4 de l'UIT-T.

10. Procédé selon la revendication 9, **caractérisé en ce qu'**est transmise, dans le message « Mid-Call Codec Negotiation », une liste de codecs dans laquelle sont insérés au moins un codec associé au premier service de communication (SKD) et au moins un codec associé au deuxième service de communication.

11. Procédé selon la revendication 10, **caractérisé en ce qu'**est inséré dans la liste de codecs au moins un codec de données multimédia (MuMe) associé au service de communication basé sur des données multimédia.

12. Procédé selon la revendication 11, **caractérisé en ce qu'**est inséré dans la liste de codecs au moins un codec de données vocales associé au service de communication (SKD) basé sur des données vocales.

13. Procédé selon la revendication 11 ou 12, **caractérisé en ce que** le codec de données multimédia est inscrit à la première position de la liste de codecs.

14. Procédé selon l'une des revendications 1 à 13, **caractérisé en ce que**, après la détermination de la possibilité de réalisation, par la deuxième unité de commutation mobile (MSC-B), la reconfiguration de la liaison utile requise pour le changement de service de communication (KD) est initialisée directement.

15. Procédé selon l'une des revendications 1 à 14, **caractérisé en ce que**, après la détermination de la possibilité de réalisation, un autre message de signalisation de service est généré par la deuxième unité de commutation mobile (MSC-B) et est transmis à la première unité de commutation mobile (MSC-A) par laquelle est initialisée la reconfiguration de la liaison utile requise pour le changement de service de communication (KD).

16. Procédé selon l'une des revendications 1 à 13, **caractérisé en ce que**, après la détermination de la possibilité de réalisation, un autre message de signalisation de service est généré par la deuxième unité de commutation mobile (MSC-B) et est transmis à la première unité de commutation mobile (MSC-A) par laquelle est signalée la possibilité de réalisation du passage au service de communication (KD).

17. Procédé selon la revendication 16, **caractérisé en ce que**, après la réception de l'autre message de signalisation de service, la première unité de commutation mobile (MSC-A) initialise la reconfiguration de la liaison utile dans le cas de la possibilité de réalisation du changement.

18. Procédé selon la revendication 15 ou 16, **caractérisé en ce qu'**un paramètre de signalisation qui signale la possibilité de réalisation est inséré dans l'autre message de signalisation de service.

19. Procédé selon la revendication 15, **caractérisé en ce que** l'autre message de signalisation de service est formé par un message « Modify to Selected Codec » conformément au protocole de signalisation « Bearer Independent Call Control » Q.1902.4 de l'UIT-T.

20. Procédé selon l'une des revendications 18 à 19, **caractérisé en ce qu'**est sélectionnée, en tant que paramètre de signalisation signalant la possibilité de réalisation, un « codec » associé au deuxième service de communication et tiré de la liste de codecs transmise via le message « Mid-Call Codec Negotiation ».

21. Procédé selon la revendication 20, **caractérisé en ce que** la possibilité de réaliser la commutation du service de communication (SKD) basé sur des données vocales au service de communication basé sur des données multimédia est signalée à la première unité de commutation mobile (MSC-A) par la sélection d'un codec de données multimédia et un refus de changement est signalé par la sélection du codec de données vocales.

22. Procédé selon l'une des revendications 1 à 21, **caractérisé en ce que** le procédé de changement de service de communication (KD) est initialisé par le premier ou le deuxième participant à la communication ou par l'une des première ou deuxième unités de commutation mobile (MSC-A, MSC-B) qui y sont associées.

23. Procédé selon l'une des revendications 1 à 22, **caractérisé en ce que** le changement réussi de service de communication (KD) est signalé à la deuxième unité de commutation mobile (MSC-B) par la première unité de commutation mobile (MSC-A) au moyen d'un message « Successful Codec Modification » conformément au protocole de signalisation « Bearer Independent Call Control » Q.1902.4 de l'UIT-T.

24. Procédé selon l'une des revendications 1 à 23, **caractérisé en ce que**, pour la transmission du premier ou des autres messages de signalisation entre la première unité de commutation mobile (MSC-A) et la deuxième unité de commutation mobile (MSC-B), ces messages sont respectivement retransmis via une ou plusieurs unités de commutation de transit (Server-T).

25. Procédé selon l'une des revendications 19 à 24, **caractérisé en ce que** le codec sélectionné transmis dans le message « Modify to Selected Codec » est évalué dans la première unité de commutation mobile (MSC-A) et, si le codec sélectionné coïncide avec le codec actuellement présent dans la première unité de commutation mobile (MSC-A), un refus du changement de service de communication est constaté.

26. Procédé selon la revendication 15 ou 16, **caractérisé en ce que**, en cas de refus du changement de service de communication (KD), par la deuxième unité de commutation mobile (MSC-B), un message « Mid-Call Codec Negotiation Failure » est transmis à la première unité de commutation mobile (MSC-A) en tant qu'autre message de signalisation de service.

27. Procédé selon l'une des revendications 1 à 26, **caractérisé en ce que**, pour déterminer la disponibilité des ressources de transmission requises pour le passage du premier service de communication (SKD) au deuxième service de communication, un message de signalisation est transmis par le centre de commutation mobile (MSC-A, MSC-B) à l'unité contrôleur d'accès (RNC-A, RNC-B) associée au terminal de communication mobile (KA,KB) et **en ce que** l'unité contrôleur d'accès détermine, sur déclenchement par le message de signalisation reçu, si les ressources de transmission radio requises pour établir le deuxième service de communication sont disponibles.

28. Procédé selon la revendication 27, **caractérisé en ce qu'**est utilisé, en tant que message de signalisation, un message « RAB Assignment Modify Request » qui est réalisé conformément au protocole de signalisation « Radio Access Network Application Part ».

29. Procédé selon la revendication 28, **caractérisé en ce que**, sur déclenchement par le message « RAB Assignment Modify Request » reçu, la disponibilité de ressources de transmission radio vers le deuxième terminal de communication mobile (KB) est déterminée dans l'unité contrôleur d'accès (RNC-A, RNC-B).

30. Procédé selon l'une des revendications 27 à 29, **caractérisé en ce qu'**est créé par l'unité de contrôleur d'accès (RNC-A, RNC-B) un autre message de signalisation via lequel est communiquée au centre de commutation mobile (MSC-A, MSC-B) respectivement associé la disponibilité des ressources de transmission radio requises pour l'établissement du deuxième service de communication.

31. Procédé selon la revendication 30, **caractérisé en ce qu'**est utilisé, en tant qu'autre message de signalisation, un message « RAB Assignment Modify Response » qui est réalisé conformément au protocole de signalisation « Radio Access Network Application Part ».

32. Procédé selon l'une des revendications 1 à 31, **caractérisé en ce que**, dans le cadre d'un passage, initialisé par l'utilisateur, du premier service de communication (SKD) au deuxième service de communication, l'interruption de la liaison utile est effectuée par le terminal de communication mobile respectif (KA, KB) suite à l'envoi d'un message « Modify » à l'unité de commutation mobile associée (MSC-A, MSC-B) en fonction du fait qu'une reconfiguration de la liaison d'accès radio est signalée ou non au terminal de communication mobile (KA, KB) respectif par l'unité de commutation mobile associée (MSC-A, MSC-B).

33. Unité de commutation mobile (MSC-A, MSC-B) pour un système de communication mobile (KS) pour exécuter un passage, initialisé par l'utilisateur, d'au moins un premier service de communication (SKD) comportant une liaison utile à au moins un deuxième service de communication (MKD), laquelle est configurée de manière telle qu'il est possible d'exécuter les étapes du procédé selon l'une des revendications 1 à 32 qui sont à exécuter dans l'unité de commutation mobile.
